# EUROPEAN PATENT APPLICATION

(11) **EP 4 611 332 A1**
(43) Date of publication of application: **03.09.2025**
(21) Application number: 22963103.1
(22) Date of filing: 27.10.2022
(51) Int. Cl.: H04L 41/0803, H04L 41/16, G06F 16/248, H04L 27/00

(54) **MODEL CONTROL METHOD AND APPARATUS, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN); LIN, Xue, Dongguan, Guangdong 523860 (CN)
(74) Representative: Novagraaf Technologies
(86) International application number: PCT/CN2022/128061
(87) International publication number: WO 2024/087119

(57) **Abstract**

A model control method and apparatus, a device, and a medium, relating to the field of wireless communications. The method is applied to a first communication device. The method comprises: transmitting a model control message, wherein the model control message is used for controlling an artificial intelligence (AI)/machine learning (ML) model, and the model control message comprises the AI/ML model identifier of the AI/ML model (210). The method provides an AI/ML model control solution based on an AI/ML model identifier.

## Description

### TECHNICAL FIELD

The present disclosure relates to the field of wireless communications, and in particular, relates to a method and apparatus for controlling models, and a device and a medium thereof.

### RELATED ART

With the continuous development of artificial intelligence (AI) and machine learning (ML) technologies, the integration of communication technologies with AI/ML technologies is one of the future trends in communications. Due to the complexity and diversity of application scenarios of communication systems, a large number of AI/ML models need to be introduced into the communication systems. However, no standardized solution has been proposed to manage the large number of introduced AI/ML models.

### SUMMARY

Embodiments of the present disclosure provide a method and apparatus for controlling models, and a device and a medium thereof, which provide an AI/ML model control solution based on AI/ML model identifiers. The technical solutions are as follows:

According to some embodiments of the present disclosure, a method for controlling models is provided. The method is applicable to a first communication device, and the method includes transmitting a model control message, wherein the model control message is used for controlling an AI/ML model, and the model control message includes an AI/ML model identifier of the AI/ML model.

According to some embodiments of the present disclosure, a method for controlling models is provided. The method is applicable to a second communication device, and the method includes transmitting a model control message, wherein the model control message is used for controlling an AI/ML model, and the model control message includes an AI/ML model identifier of the AI/ML model.

According to some embodiments of the present disclosure, an apparatus for controlling models is provided. The apparatus is implemented as a first communication device, and the apparatus includes a first transmitting module, configured to transmit a model control message, wherein the model control message is used for controlling an AI/ML model, and the model control message includes an AI/ML model identifier of the AI/ML model.

According to some embodiments of the present disclosure, an apparatus for controlling models is provided. The apparatus is implemented as a second communication device, and the apparatus includes a second transmitting module, configured to transmit a model control message, wherein the model control message is used for controlling an AI/ML model, and the model control message includes an AI/ML model identifier of the AI/ML model.

According to some embodiments of the present disclosure, a first communication device is provided. The first communication device includes a processor and a transceiver connected to the processor. The transceiver is configured to transmit a model control message, wherein the model control message is used for controlling an AI/ML model, and the model control message includes an AI/ML model identifier of the AI/ML model.

According to some embodiments of the present disclosure, a second communication device is provided. The second communication device includes a processor and a transceiver connected to the processor. The transceiver is configured to transmit a model control message, wherein the model control message is used for controlling an AI/ML model, and the model control message includes an AI/ML model identifier of the AI/ML model.

According to some embodiments of the present disclosure, a first communication device is provided. The first communication device includes a processor and a memory. The memory is configured to store at least one instruction, at least one program, a code set, or an instruction set therein. The at least one instruction, the at least one program, the code set, or the instruction set, when loaded and executed by the processor, causes the first communication device to perform the method for controlling models as described above.

According to some embodiments of the present disclosure, a second communication device is provided. The second communication device includes a processor and a memory. The memory is configured to store at least one instruction, at least one program, a code set, or an instruction set therein. The at least one instruction, the at least one program, the code set, or the instruction set, when loaded and executed by the processor, causes the first communication device to perform the method for controlling models as described above.

According to some embodiments of the present disclosure, a computer-readable storage medium is provided. The readable storage medium stores one or more executable instructions. The one or more executable instructions, when loaded and executed by a processor of a communication device, cause the communication device to perform the method for controlling models as described above.

According to some embodiments of the present disclosure, a chip is provided. The chip includes one or more programmable logic circuits and/or one or more program instructions. The chip, when running on a communication device, causes the communication device to perform the method for controlling models as described above.

According to some embodiments of the present disclosure, a computer program product is provided. The computer program product, when running on a processor of a communication device, causes the communication device to perform the method for controlling models as described above.

The technical solutions according to the embodiments of the present disclosure achieve at least the following beneficial effects:

The AI/ML model identifier is defined for the AI/ML model, and the AI/ML model identifier is used for distinguishing different AI/ML models. By transmitting a model control message that carries the AI/ML model identifier, control and management of the specified AI/ML model are achieved.

### BRIEF DESCRIPTION OF DRAWINGS

For clearer descriptions of the technical solutions according to the embodiments of the present disclosure, the accompanying drawings required for describing the embodiments are briefly introduced hereinafter. Apparently, the accompanying drawings in the following description show merely some embodiments of the present disclosure, and those of ordinary skill in the art may still derive other drawings from these accompanying drawings without creative efforts.
FIG. 1 is a schematic diagram of a communication system according to some embodiments of the present disclosure;
FIG. 2 is a schematic diagram of a network structure according to some embodiments of the present disclosure;
FIG. 3 is a flowchart of a method for controlling models according to some embodiments of the present disclosure;
FIG. 4 is a flowchart of a method for controlling models according to some embodiments of the present disclosure;
FIG. 5 is a schematic diagram of a method for controlling models according to some embodiments of the present disclosure;
FIG. 6 is a flowchart of a method for controlling models according to some embodiments of the present disclosure;
FIG. 7 is a flowchart of a method for controlling models according to some embodiments of the present disclosure;
FIG. 8 is a schematic diagram of a method for controlling models according to some embodiments of the present disclosure;
FIG. 9 is a schematic diagram of a method for controlling models according to some embodiments of the present disclosure;
FIG. 10 is a structural block diagram of an apparatus for controlling models according to some embodiments of the present disclosure;
FIG. 11 is a structural block diagram of an apparatus for controlling models according to some embodiments of the present disclosure; and
FIG. 12 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art understand that, with the evolution of network architecture and the emergence of new service scenarios, the technical solutions according to the embodiments of the present disclosure are also applicable to similar technical problems.

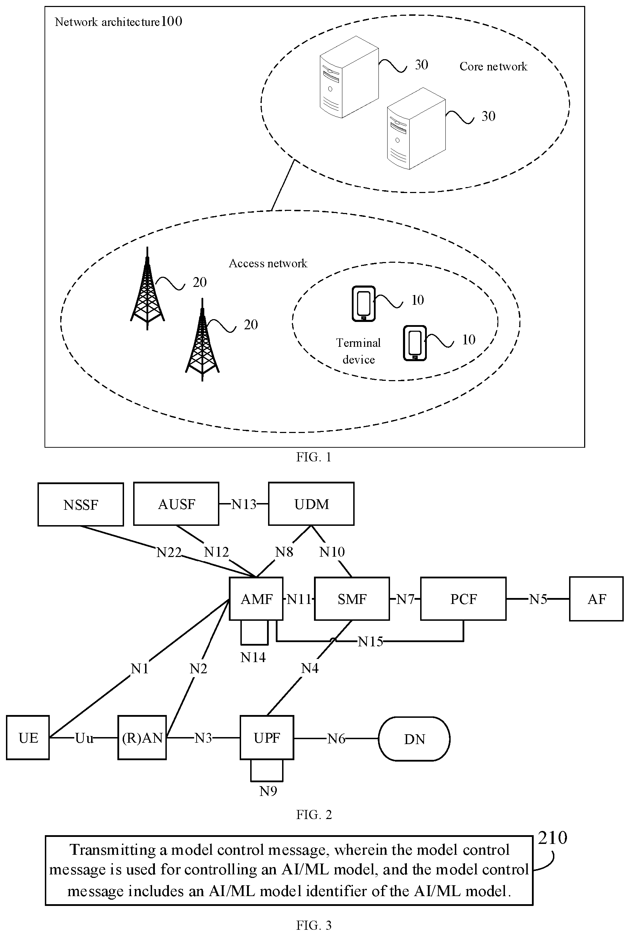

FIG. 1 is a schematic diagram of a network architecture 100 according to some embodiments of the present disclosure. The network architecture 100 may involve a terminal device 10, an access network device 20, and a core network device 30.

The terminal device 10 may refer to a user equipment (UE), an access terminal device, a subscriber unit, a subscriber station, a mobile station, a mobile terminal, a remote station, a remote terminal device, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with wireless communication function, a computing device, or other processing device connected to a wireless modem, a vehicle-mounted device, a wearable device, a terminal device in a 5^{th} generation system (5GS), or a terminal device in an evolved public land mobile network (PLMN), or the like, which is not limited in the embodiments of the present disclosure. For convenience of description, the devices above are collectively referred to as terminal devices. A plurality of terminal devices 10 are usually deployed, and one or more terminal devices 10 may be distributed within a cell managed by each access network device 20.

The access network device 20 is a device deployed in the access network to provide wireless communication functions for the terminal device 10. The access network device 20 may refer to various forms of macro base stations, micro base stations, relay stations, access points, and the like. In systems employing different wireless access technologies, the name of the device with functions of the access network device may vary. For example, the device is referred to as a gNodeB or a gNB (a next generation node B or a new-generation access network node) in a 5G NR system. The term "access network device" may be referred to by different names with the evolution of communication technologies. For convenience of description, in the embodiments of the present disclosure, the devices that provide wireless communication functions for the terminal device 10 are collectively referred to as access network devices. In some embodiments, a communication relationship may be established between the terminal device 10 and the core network device 30 via the access network device 20. Exemplarily, in a long-term evolution (LTE) system, the access network device 20 may be an evolved universal terrestrial radio access network (EUTRAN) or one or more eNodeBs in the EUTRAN. In the 5G NR system, the access network device 20 may be a radio access network (RAN) or one or more gNBs in the RAN. In the embodiments of the present disclosure, unless otherwise specified, the term "network device" refers to the access network device 20, such as a base station.

The core network device 30 is a device deployed in the core network. The core network device 30 mainly functions to provide a user connection, user management and service bearing, to and to provide an interface to an external network as a bearer network. For example, in the 5G NR system, the core network device may include access and mobility management function (AMF) network element, an authentication server function (AUSF) network element, a user plane function (UPF) network element, a session management function (SMF) network element, a location management function (LMF) network element, a policy control function (PCF) network element, a unified data management (UDM) network element, and the like.

In some embodiments, the access network device 20 communicates with the core network device 30 using a specific air interface technology, such as an NG interface in the 5G NR system. The access network device 20 communicates with the terminal device 10 using a specific air interface technology, such as a Uu interface.

FIG. 2 is a schematic diagram of another network architecture according to some embodiments of the present disclosure. The network architecture may involve a terminal device, an access network device, and a core network device.

In some embodiments, the network architecture may involve the terminal device (including a UE), an access network supporting 3GPP technology (including a RAN or an access network (AN), a UPF network element, an AMF network element, an SMF network element, a PCF network element, an application function (AF), a data network (DN), a network slice selection function (NSSF), an AUSF, and a UDM.

Those skilled in the art may understand that the 5G network architecture illustrated in FIG. 2 does not constitute limitations on the 5G network architecture. In specific implementations, the 5G network architecture may involve more or fewer network elements than those illustrated, or some of the network elements may be combined. It should be understood that in FIG. 2, AN or RAN is represented as (R)AN.

The access network device enables wireless access for the terminal device to the network architecture, and is mainly responsible for wireless resource management, quality of service (QoS) management, data compression, encryption, and the like on air interface side. For example, the access network device may be a base station (NodeB), an evolved base station (eNodeB), a base station in the 5G mobile communication system or new radio (NR) communication system, a base station in future mobile communication systems, or the like.

The core network device includes the NSSF, the AUSF, the UDM, the AMF, the SMF, the PCF, and the UPF.

The UE establishes an access stratum connection to the (R)AN over a Uu interface to implement interaction of access stratum messages and wireless data transmission. The UE establishes a non-access stratum (NAS) connection to the AMF over an N1 interface to implement interaction of NAS messages. The AMF is the mobility management function in the core network, the SMF is the session management function in the core network. The AMF is responsible for forwarding session management-related messages between the UE and the SMF in addition to perform mobility management on the UE. The PCF is the policy management function in the core network, and is responsible for formulating policies related to mobility management, session management, charging, and the like for the UE. The PCF performs data transmission with an external AF over an N5 interface. The UPF refers to the user plane function in the core network, and performs data transmission with an external DN over an N6 interface, and performs data transmission with the AN over an N3 interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system, a narrow band Internet of things (NB-IoT) system, and other communication systems, which is not limited in the present disclosure.

FIG. 3 is a flowchart of a method for controlling models according to some embodiments of the present disclosure. The method may be applicable to a first communication device or a second communication device. For example, the first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 210, a model control message is transmitted, wherein the model control message is used for controlling an AI/ML model, and the model control message includes an AI/ML model identifier of the AI/ML model.

In some embodiments, the model control message is transmitted between the first communication device and the second communication device.

The first communication device may be one of the first terminal device or the first network device. The second communication device may be one of the second terminal device or the second network device. The first network device may be the first access network device or the first core network device. The second network device may be the second access network device or the second core network device.

The first core network device is any one of: an AMF network element, an AUSF network element, a UPF network element, an SMF network element, an LMF network element, a PCF network element, or a UDM network element. The second core network device is any one of: an AMF network element, an AUSF network element, a UPF network element, an SMF network element, an LMF network element, a PCF network element, or a UDM network element.

The model control message is used for managing and controlling the AI/ML model, or the model control message is used for performing at least one control operation on the AI/ML model. For example, the model control message has at least one of the following functions: the model control message is used for activating, deactivating, switching, deleting, or updating the AI/ML model, and/or the model control message is used for transmitting AI/ML model-related information of the AI/ML model, and/or the model control message is used for transmitting the mapping relationship between the global unique identifier and the regional definition identifier of the AI/ML model.

In some embodiments, the model control message in the embodiments of the present disclosure includes at least one communication message related to the AI/ML model transmitted between the first communication device and the second communication device. Alternatively, the model control message includes at least one communication message containing the AI/ML model identifier transmitted between the first communication device and the second communication device.

In some embodiments, ten exemplary model control messages are provided: a first message, a second message, a third message, a fourth message, a fifth message, a sixth message, a seventh message, an eighth message, a ninth message, and a tenth message. These ten exemplary model control messages are explained respectively in subsequent embodiments. The model control message is not limited to these ten examples, and the model control message may also refer to other messages used for controlling/managing AI/ML models.

In some embodiments, the model control message (any one of the first message to the tenth message) may be one of a unicast message, a multicast message, or a broadcast message.

Unicast message (one-to-one): The source transmits the unicast message over a unicast channel, and only the communication device allocated with the corresponding unicast resource is capable of attempting to receive the unicast message. The unicast message may also be referred to as dedicated signaling.

Multicast message (one-to-many): The source transmits the multicast message over a multicast channel, and the communication devices within the coverage of the multicast signal and being group members are capable of attempting to receive the multicast message. When a communication device joins a group, the communication device obtains multicast communication-related resources.

Broadcast message (one-to-any): The source transmits the broadcast message over a broadcast channel, and any terminal device within the coverage of the broadcast signal is capable of attempting to receive the broadcast message.

The communication device is any one of a terminal device, an access network device, or a core network device.

In some embodiments, the model control message (any one of the first message to the tenth message) may be any one of the following message types: a NAS message, a radio resource control (RRC) message, a medium access control (MAC) control element (CE) message, a downlink control information (DCI) message, an uplink control information (UCI) message, a physical uplink shared channel (PUSCH) message, an inter-node message, an Xn message, an F1 message, an E1 message, an NG message, or a core network bus message.

The model control message includes the AI/ML model identifier of the AI/ML model, and the AI/ML model identifier is used for indicating the AI/ML model that needs to be controlled/managed. In some embodiments, an association relationship is present between the AI/ML model identifier and the AI/ML model description information associated with the AI/ML model.

In summary, the method according to the embodiments of the present disclosure defines the AI/ML model identifier of the AI/ML model, and the AI/ML model identifier is used for distinguishing different AI/ML models. By transmitting a model control message that carries the AI/ML model identifier, control and management of the specified AI/ML model is achieved.

Exemplarily, the definition of AI/ML model identifier and various model control messages are explained respectively.

### I. Definition of AI/ML model identifier

AI/ML model-related information includes an AI/ML model identifier (AI/ML Model ID) and/or AI/ML model description information. In some embodiments, the AI/ML model-related information further includes algorithm data of the AI/ML model (such as the structural data and weight parameters of the algorithm corresponding to the AI/ML model).

An association relationship is present between the AI/ML model identifier and the AI/ML model description information associated with the AI/ML model.

AI/ML model description information includes at least one of:
information 1: a functional feature associated with the AI/ML model;
information 2: type information of an input parameter required by the AI/ML model;
information 3: format requirement information of an input parameter required by the AI/ML model;
information 4: a preprocessing rule for an input parameter required by the AI/ML model;
information 5: type information of an output parameter required by the AI/ML model;
information 6: format requirement information of an output parameter required by the AI/ML model;
information 7: a preprocessing rule for an output parameter required by the AI/ML model;
information 8: application scenario information of the AI/ML model;
information 9: deployment location information of the AI/ML model;
information 10: a capability requirement for using the AI/ML model;
information 11: performance monitoring indicator information of the AI/ML model;
information 12: attribution information of the AI/ML model;
information 13: effective usage range information of the AI/ML model;
information 14: generalization feature information of the AI/ML model;
information 15: version number information of algorithm data of the AI/ML model;
information 16: precision level information of an algorithm of the AI/ML model;
information 17: compilation or storage format information of algorithm data of the AI/ML model.

The seventeen types of AI/ML model description information mentioned above are detailed as follows:
Information 1: a functional feature associated with the AI/ML model
   This information indicates the function associated with the AI/ML model. For example, AI/ML model 1 is used for a channel state information (CSI) compression feedback function, AI/ML model 2 is used for a mobility enhancement function, AI/ML model 3 is used for a beam prediction function, AI/ML model 4 is used for a positioning function, and the like.
Information 2: type information of an input parameter required by the AI/ML model.
   This information indicates the type of the input parameter required by the AI/ML model. For example, AI/ML model 1 is used for the CSI compression feedback function, and the types of input parameters required by the AI/ML model 1 include channel measurement results before channel estimation or channel measurement results after channel estimation or channel impulse response matrix obtained based on channel measurement results, or the like.

For example, AI/ML model 3 is used for the beam prediction function, and the types of input parameters required the AI/ML model 3 include index information of the actually measured beam, signal measurement result information of each beam obtained from actual measurement, or the like.

Information 3: format requirement information of an input parameter required by the AI/ML model

This information indicates the format of the input parameter required by the AI/ML model. For example, AI/ML model 3 is used for the beam prediction function, assuming that the network device is capable of scheduling resources in eight beam directions, but only transmits measurement reference signals in four of the beam directions, then the terminal device only obtains measurement results of four beams in each measurement process. Scenario 1: The beam prediction AI/ML model only predicts the signal measurement results of other beams that have not been measured at the current time. In a case where the beam prediction AI/ML model used in scenario 1 only needs the measurement results of four beams as inputs, then the four beam measurement results obtained in each measurement process by the terminal device may be used as inputs for the beam prediction AI/ML model in scenario 1 (the outputs include the measurement results of eight beams associated with this measurement, i.e., four true values and four predicted values, or the outputs are the predicted measurement results of four beams). Scenario 2: The beam prediction AI/ML model is used for predicting the measurement results of eight beams in a future period, then the inputs of the beam prediction AI/ML model in this scenario may be the set of measurement results of four beams obtained in the past N measurement processes, and the outputs of the beam prediction AI/ML model may be the set of measurement results of eight beams in the future period. For example, the inputs of the beam prediction AI/ML model may be the set of three groups of measurement results of four beams obtained at times T-3, T-2, and T-1, and the outputs of the beam prediction AI/ML model may be the set of two groups of measurement results of eight beams at times T and T+1.

In summary, during beam prediction (the input data type of the model is the same) using the measurement results of four beams, the required input data format varies for different application scenarios. Therefore, the format requirement information of input parameters required by the AI/ML model is also one of the key pieces of information describing an AI/ML model.

Information 4: a preprocessing rule for an input parameter required by the AI/ML model.

This information indicates how to reprocess the input data set of the AI/ML model. The reprocessing process may involve at least one of the following operations: dimensionality reduction of data, dimensionality increase of data, redundancy removal, and redistribution.

Dimensionality reduction of data: In a case where the dimension of the data is higher than the dimension required by the model input, the data needs to be subjected to dimensionality reduction based on preprocessing rules before being input into the mode.

Dimensionality increase of data: In a case where the dimension of the data is lower than the dimension required by the model input, the data needs to be subjected to dimensionality increase based on preprocessing rules before being input into the model.

Redundancy removal: In a case where the distribution or information content of multiple sets of data is similar, the data needs to be subjected to redundancy removal based on preprocessing rules before being input into the model, as redundant data often does not contribute to performance improvement and instead increases invalid operations.

Redistribution: In some cases, it is difficult to obtain a model with good generalization by training a model with data that has similar feature information. Redistributing data with different feature information is conducive to obtaining a model with better generalization.

For example, in scenario 1 exemplified in information 3, the terminal device may measure four of eight beams in cell A, but may measure five of the eight beams in cell B, and may measure three of the eight beams in cell C. In a case where the same beam prediction AI/ML model (input only requires the measurement results of four beams) is to be used for beam prediction in cells A, B, and C, the measurement results in cell A may be used directly, but the measurement results obtained in cell B need to be subjected to dimensionality reduction, i.e., selecting four measurement results from the measurement results of the five available beams as the input parameters required by the AI/ML model, while the measurement results obtained in cell C need to be subjected to dimensionality increase of data, i.e., converting the measurement results of the three available beams into four measurement results to obtain the input parameters required by the AI/ML model.

In another implementation, at least two of information 2, information 3, and information 4 may be combined and defined, which is not limited in the present disclosure.

Information 5: type information of an output parameter required by the AI/ML model

This information indicates the type of the output parameter required by the AI/ML model. For example, AI/ML model 3 is used for the beam prediction function, and the types of output parameters include the index information of the actually unmeasured beam, the predicted signal measurement result information of each actually unmeasured beam, and the like.

Information 6: format requirement information of an output parameter required by the AI/ML model

This information indicates the format of output parameters required by the AI/ML model. For example, AI/ML model 3 is used for the beam prediction function, and the output parameters may be beam prediction results for a future time or a set of beam prediction results for multiple future times. For example, the inputs of the model may be the set of three groups of measurement results of four beams obtained at times T-3, T-2, and T-1, and the outputs of the model may be the measurement results of eight beams at time T, or the set of two groups of measurement results of eight beams at times T and T+1.

In summary, when predicting beam measurement results in the future (the type of output data of the model is the same), the format of output data required by the AI/ML model 3 varies for different application scenarios. Therefore, the format requirement information of output parameters required by the AI/ML model is also one of the key pieces of information describing an AI/ML model.

Information 7: a preprocessing rule for an output parameter required by the AI/ML model

This information indicates how to reprocess the output data set of the AI/ML model. The reprocessing process may involve at least one of: dimensionality reduction of data, dimensionality increase of data, redundancy removal, or redistribution. For specific processing methods, reference may be made to the relevant description in information 4.

In another implementation, at least two of information 5, information 6, and information 7 may be combined and defined, which is not limited in the present disclosure.

Information 8: application scenario information of the AI/ML model

This information refers to different usage scenarios under the same functional feature. For example, for an AI/ML model used for positioning, the application scenarios may be further subdivided into a line of sight (LoS) scenario, a non-line of sight (NLoS) scenario, or a mixed scenario (including both LoS and NLoS). For example, for an AI/ML model used for mobility control, the application scenarios may be further subdivided into a ground communication scenario or a non-ground communication scenario (including sub-scenarios such as satellite communication, drone communication, balloon communication, or the like), and each scenario may be further divided into sub-scenarios such as a high-speed mobility scenario, a medium-speed mobility scenario, a low-speed mobility scenario, or the like, and may also be divided into sub-scenarios such as a high-frequency mobility scenario, a low-frequency mobility scenarios, or the like. Two of the above-mentioned scenarios may be combined, for example, a high-frequency mobility scenario for ground communication.

In some embodiments, information 8 may also have a value that indicates that the application scenario of the AI/ML model is a full scenario (i.e., the AI/ML model is applicable to any scenario corresponding to its associated functional feature). For example, for an AI/ML model used for positioning, assuming information 8 contains two bits, then the value '00' indicates any scenario, '01' indicates an LoS scenario, '10' t indicates an NLoS scenario, and '11' indicates a mixed scenario.

Information 9: deployment location information of the AI/ML model

This information includes any of the following meanings: deployed in a core network device, deployed in an application server (OTT server), deployed in operation administration and maintenance (OAM), deployed in an access network device, deployed in a terminal device, or no deployment location restriction.

Information 10: a capability requirement for using the AI/ML model.

This information includes at least one of: a minimum floating-point operation capability required when using the AI/ML model, a minimum memory requirement when using the AI/ML model, a memory size level occupied by algorithm data of the AI/ML model (before compilation), a memory size level occupied by algorithm data of the AI/ML model after compilation, a minimum input data rate (or bit rate) required for using the AI/ML model, a maximum input data rate (or bit rate) required when using the AI/ML model, a minimum output data rate (or bit rate) required for using the AI/ML model, and a maximum output data rate (or bit rate) required for using the AI/ML model.

Information 11: performance monitoring indicator information of the AI/ML model.

This information includes at least one of: an average energy consumption of a single inference process, an average floating-point calculation amount of a single inference process, an average delay of a single inference process, a system throughput, a system bit error rate, or an average transmission delay of data packets.

Information 12: attribution information of the AI/ML model.

This information indicates the relevant information of a data provider of the AI/ML model, and specifically includes: a country or region to which the AI/ML model data belongs and/or service provider information to which the AI/ML model data belongs.

The service provider may be any of: over the top (OTT, which provides application services to users via the internet) vendor information, network operator information (for example, represented by a public land mobile network (PLMN) identifier), or public website information.

Information 13: effective usage range information of the AI/ML model

This information includes at least one of: a geographic area allowed for effective use, country allowed for effective use, a PLMN allowed for effective use, a tracking area code (TAC) allowed for effective use, a RAN area code (RANAC) allowed for effective use, or a cell allowed for effective use.

Information 14: generalization feature information of the AI/ML model.

The generalization feature reflects the extent to which an AI/ML model is applicable to a wide range of scenarios. Generally, the higher the generalization feature of an AI/ML model, the more application scenarios the model is applicable to. The generalization feature information of the AI/ML model may include at least one application scenario information of the AI/ML model (see the definition of information 8), which indicates that the associated AI/ML model may be used in the above-mentioned application scenarios.

Information 15: version number information of algorithm data of the AI/ML model

As different parameters of the same application scenario change over time, the algorithm data of the AI/ML model with corresponding to a function may need to be fine-tuned or updated. The AI/ML models before and after the update are associated with the same application scenario and serve the same function, but the details of the model algorithm data are slightly different, and thus these models may be distinguished by using the version number of the model algorithm, which facilitates the control and management of similar AI/ML model algorithms.

Information 16: precision level information of an algorithm of the AI/ML model

Even for the AI/ML models corresponding to same function and the same application scenario, the complexity of the model algorithm design is different, and the inference precision of the AI/ML models are also be different. To distinguish the differences in inference precision of similar AI/ML models, the precision level information of the algorithm of the AI/ML model may be used for describing a corresponding inference precision of AI/ML models.

Information 17: compilation or storage format information of algorithm data of the AI/ML model

Algorithm of the AI/ML model is essentially a program written in a computer language. The file types of programs written in different language platforms are different. Some languages are compatible with each other, while some are not. Therefore, the compilation format information of algorithm data of the AI/ML model is also important information describing an AI/ML model. This information may inform the user of the AI/ML model about the required compilation environment for using the AI/ML model. Otherwise, using an incompatible language compilation environment results in the inability to use the corresponding AI/ML model algorithm.

Based on the above AI/ML model description information, the following definitions of AI/ML model identifier are provided:

### Definition 1

The AI/ML model identifier includes an information field, and the AI/ML model identifier is associated with information 1.

The AI/ML model identifier is only used for distinguishing different functional features, i.e., the functional feature associated with the corresponding AI/ML model may be determined based on the AI/ML model identifier. The association relationship between the AI/ML model identifier and the functional feature is agreed upon by protocol default (i.e., the protocol explicitly provides the specific association relationship). Under definition 1, the model identifier is an overall information field and fails to be subdivided into sub-information fields.

For example, the model identifier corresponding to the AI/ML model used for CSI compression feedback is ID1, the model identifier corresponding to the AI/ML model used for beam prediction is ID2, and the model identifier corresponding to the AI/ML model used for positioning function is ID3. Therefore, based on an AI/ML model identifier, its associated functional feature may be known. For example, the AI/ML model identifier corresponding to an AI/ML model is ID1, then the AI/ML model is used for CSI compression feedback.

### Definition 2

The AI/ML model identifier includes an information field, and the AI/ML model identifier is associated with information 1, and the AI/ML model identifier is also associated with at least one of information 2 to information 17.

The AI/ML model identifier is not only associated with functional feature (information 1) but also further associated with at least one of information 2 to information 17. That is, based on an AI/ML model identifier, not only the functional feature associated with the AI/ML model corresponding to the AI/ML model identification is known, but also other AI/ML model description information sub-information (i.e., at least one of information 2 to information 17) of the corresponding AI/ML model is known. The above association relationship is agreed upon by protocol default. Under definition 2, the model identifier is an overall information field and cannot be subdivided into sub-information fields.

For example, assuming that the AI/ML model identifier is associated with both information 1 and information 8, the protocol stipulates that the model identifier corresponding to the AI/ML model used for positioning function in LoS scenarios is ID 31, the model identifier corresponding to the AI/ML model used for positioning function in NLoS scenarios is ID 32, and the model identifier corresponding to the AI/ML model used for positioning function in LoS and NLoS mixed scenarios is ID 33. When a model identifier corresponding to an AI/ML model is ID 32, then the AI/ML model is used for positioning function and the application scenario is NLoS scenario.

### Definition 3

The AI/ML model identifier includes at least two information fields, and each of the at least two information fields is associated with at least one of information 1 to information 17.

The AI/ML model identifier is not only associated with functional feature, but may also be clearly divided into at least two AI/ML model identifier sub-information fields. Each information field (or sub-information field) is associated with at least one of information 1 to information 17, and each information field contains at least one bit.

Definition 3 may be further subdivided into the following two sub-definitions:

Definition 3-1: The at least two information fields of the AI/ML model identifier include a first information field and at least one additional information field. The first information field is associated with information 1, and each of the at least one additional information field is associated with at least one of information 2 to information 17.

The AI/ML model identifier includes information field 1 (or referred to as the first information field), and information field 1 is only associated with the functional feature of the AI/ML model. The AI/ML model identifier further includes at least one additional information field, wherein each of the at least one additional information field is associated with at least one of the information 2 to the information 17. The association relationship between different additional information fields and at least one of the information 2 to the information 17 is agreed upon by protocol default.

For example, the AI/ML model identifier is listed in Table 1, which includes information field 1, information field 2, and information field 3. Information field 1 is the first information field, and information fields 2 and 3 are additional information fields. Information field 1 is associated with functional feature, and information fields 2 and 3 may be associated with at least one of the information 2 to information 17. For example, information field 2 is associated with the above information 8, and information field 3 is associated with the above information 9 and information 10.

**Table 1 schematic definition 3-1 of the AI/ML model identifier**

| The AI/ML model identifier includes the following information fields | | |
|---|---|---|
| Information field 1 | Information field 2 | Information field 3 |

Definition 3-2: The at least two information fields of the AI/ML model identifier include a first information field and at least one additional information field. The first information field is associated with information 1, and the first information field is also associated with at least one of information 2 to information 17. Each of the at least one additional information field is associated with at least one of information 2 to information 17.

The AI/ML model identifier includes information field 1 (or referred to as the first information field). Information field 1 is not only associated with the functional feature of the AI/ML model but also associated with at least one of information 2 to information 17. At the same time, the AI/ML model identifier further includes at least one additional information field, wherein each of at least one additional information field is associated with at least one of information 2 to information 17. The association relationship between different information fields and at least one of information 2 to information 17 is agreed upon by protocol default.

For example, the AI/ML model identifier is listed in Table 2, which includes information field 1, information field 2, and information field 3. Information field 1 is the first information field, and information fields 2 and 3 are additional information fields. Information field 1 is associated with the functional feature of the AI/ML model and is also associated with at least one of the information 2 to information 17. Information fields 2 and 3 may each be associated with at least one of the information 2 to information 17. For example, information field 1 is associated with information 1 and information 8, information field 2 is associated with information 9 and information 10, and information field 3 is associated with information 11.

**Table 2 Schematic definition 3-2 of AI/ML model identifier**

| The AI/ML model identifier includes the following information fields | | |
|---|---|---|
| Information field 1 | Information field 2 | Information field 3 |

The AI/ML model identifier is not limited to the examples in Table 1 and Table 2. Many other examples of AI/ML model identifier may be present, which are not listed herein.

In some embodiments, regardless of the definition of the AI/ML model identifier mentioned above, the AI/ML model identifier may be a global unique identifier or a regional definition identifier.

Global unique identifier: The meaning corresponding to the AI/ML model identifier is globally applicable. For example, the AI/ML model identifier for the positioning function is ID 3, then in any operator network worldwide, AI/ML model identifier ID 3 only indicates the AI/ML model corresponding to the positioning function.

Regional definition identifier: This identifier may also be referred to as an operator-defined identifier, and the regional definition identifier is only valid for a specific operator, and the meaning of this identifier is usually defined by the operator itself.

In some embodiments, the value range of the regional definition identifier is generally strictly distinguished from the value range of the global unique identifier. A simple way to distinguish these value ranges is to allocate a dedicated value field for the value of regional definition identifier, thereby avoiding the ambiguity caused by the same value of the two identifiers.

In summary, in the method according to the embodiments, the definition of AI/ML model identifier is divided into several sub-information fields, different message formats (long and short formats) may be used in different scenarios, such that flexible control of operations such as activation, deactivation, switching, and deletion of AI/ML models is achieved.

Exemplarily, based on the definition of AI/ML model identifier described above, function control based on AI/ML model identifier may be achieved.

II. Function control based on AI/ML model identifier.

The embodiments of the present disclosure exemplarily provide six types of function control based on AI/ML model identifier:
function 1: activation;
function 2: deactivation;
function 3: switching;
function 4: deletion;
function 5: acquiring AI/ML model-related information associated with the second communication device; and
function 6: acquiring AI/ML model-related information upon local mapping by the second communication device.

### Function 1: activation.

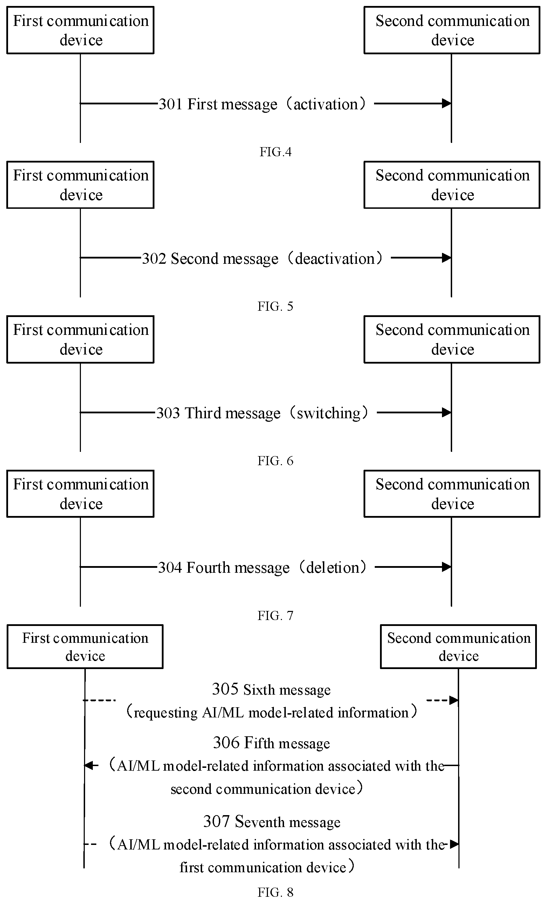

FIG. 4 is a flowchart of a method for controlling models according to some embodiments of the present disclosure. The method may be applicable to a communication system including a first communication device and a second communication device. The first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 301, the first communication device transmits a first message, wherein the first message is used for an activation operation for an AI/ML model.

The second communication device receives the first message from the first communication device. In some embodiments, the first message may be any one of a unicast message, a multicast message, or a broadcast message.

Implementation 1: In a case where the AI/ML model identifier adopts definition 1 or definition 2, the AI/ML model identifier field contained in the AI/ML model activation information field of the first message has only one information format, i.e., the definition format of the AI/ML model identifier.

That is, the first message includes an AI/ML model activation information field, wherein the AI/ML model activation information field includes an AI/ML model identifier field. In a case where the AI/ML model identifier includes one information field, the information format of the AI/ML model identifier field contained in the AI/ML model activation information field is the definition format of the AI/ML model identifier.

Implementation 2: In a case where the AI/ML model identifier adopts definition 3 (including definition 3-1 or definition 3-2), the information format of the AI/ML model identifier field contained in the AI/ML model activation information field of the first message includes up to (2ⁿ - 1) types, wherein n represents the number of information fields in the definition of the AI/ML model identifier.

That is, the first message includes an AI/ML model activation information field, wherein the AI/ML model activation information field includes an AI/ML model identifier field. In a case where the AI/ML model identifier includes at least two information fields, the information format of the AI/ML model identifier field contained in the AI/ML model activation information field includes up to (2ⁿ-1) types, wherein n represents the number of information fields in the AI/ML model identifier.

In some embodiments, regardless of which definition (any one of definition 1 to definition 3) the AI/ML model identifier adopts, the AI/ML model activation information field in the first message further includes at least one other information field (information fields other than the AI/ML model identifier information field), wherein each of the at least one other information field contains at least one of information 2 to information 17 described above. In some embodiments, each of the at least one other information field may also contain at least one of cell identity information, frequency point identity information, or bandwidth part (BWP) identity information.

In some embodiments, each of the at least one other information field in the AI/ML model activation information field is an optional field or a mandatory field. Assuming that the AI/ML model activation information field includes m (m is a natural number) other information fields, then the information format of the AI/ML model activation information field in the first message includes up to (2^{n+m}-1) types, wherein n represents the number of information fields in the AI/ML model identifier.

Exemplarily, the first communication device may flexibly choose which information format of the AI/ML model activation information field to use to activate the corresponding AI/ML model in the second communication device according to actual needs. For example, the AI/ML model identifier is defined as in Table 1, in a case where only one type of AI/ML model associated with information field 1 is present in the second communication device, the AI/ML model activation information field transmitted by the first communication device only needs to include AI/ML model identifier information field 1, and information field 2, information 3, and other information fields may be omitted. In a case where at least two types of AI/ML models associated with information field 1 is present in the second communication device, the AI/ML model activation information field transmitted by the first communication device needs to include AI/ML model identifier information field 1 and also needs to adaptively include at least one of information field 2, information field 3, and other information fields according to differentiation requirements of the model.

Exemplarily, the information format of the AI/ML model activation information field includes: x information fields among at least one information field (including the case of other information fields) are mandatory fields of the AI/ML model activation information field, and the information fields other than the x information fields among the at least one information field are optional fields of the AI/ML model activation information field, wherein x is a positive integer.

For example, Table 3 lists a schematic definition of the format of the AI/ML model activation information field included in a first message. The first message itself may include a message header, and Table 3 only introduces the AI/ML model activation information field included in the specific first message. In Table 3, information field 1 is mandatory, while the remaining information fields are optional, wherein 'O' indicates optional. In some embodiments, the 'O' field occupies one bit, used for indicating whether the corresponding associated information field appears.

**Table 3 Schematic definition 1 of the format of the AI/ML model activation information field included in the first message**

| | | |
|---|---|---|
| AI/ML Model Identifier Information Field | Information field 1 | |
| | O | Information field 2 |
| | O | Information field 3 |
| | O | ...... |
| | O | Information field n |
| Other Information Field | O | Other information field 1 |
| | O | Other information field 2 |
| | O | ...... |
| | O | Other information field m |

Similarly, Table 4 lists another schematic definition of the format of the AI/ML model activation information field included in a first message. In Table 4, information fields 1 and 2 are mandatory, while the remaining information fields are optional.

**Table 4 Schematic definition 2 of the format of the AI/ML model activation information field included in the first message**

| | | |
|---|---|---|
| AI/ML Model Identifier Information Field | Information field 1 | |
| | Information field 2 | |
| | O | Information field 3 |
| | O | Information field 4 |
| | O | ...... |
| | O | Information field n |
| Other Information Field | O | Other information field 1 |
| | O | Other information field 2 |
| | O | ...... |
| | O | Other information field m |

**That** is, in the format definition of the AI/ML model activation information field included in the first message in Implementation 2, at least one field is mandatory, and the remaining fields are optional.

It should be noted that in a case where the definition of the AI/ML model identifier includes n information fields and the AI/ML model activation information field further includes m other information fields, the information format of the AI/ML model activation information field included in the first message in Implementation 2 may theoretically include up to (2^{n+m} - 1) types. However, considering the effectiveness of practical applications, some formats are meaningless. For example, a specific format of the information field 1 is not listed in Table 3 and thus information field 1 fails to be associated with functional feature, and the second communication device is incapable of determining which AI/ML model for a specific function needs to be activated. Obviously, such format needs to be excluded. The specific format definition of the information format of the AI/ML model activation information field included in the first message may be explicitly provided by protocol default, but at least one format needs to be defined.

In some embodiments, the first message is used for activating at least one AI/ML model. That is, the types (number) of AI/ML models activated by using the first message may be one or more.

In some embodiments, the first message is a dedicated message for AI/ML model activation. For example, the first message may be referred to as a model activation message.

Alternatively, the first message is a general message for AI/ML model control, and the first message includes an AI/ML model activation information field for the activation operation. For example, the first message may be referred to as a model control message. The model control message includes multiple AI/ML model control information fields corresponding to different control operations, for example, an AI/ML model activation information field corresponding to the activation operation.

In summary, in the method according to the embodiments, the activation operation for the specified AI/ML model is achieved by transmitting a first message carrying the AI/ML model identifier.

### Function 2: deactivation

FIG. 5 is a flowchart of a method for controlling models according to some embodiments of the present disclosure. The method may be applicable to a communication system including a first communication device and a second communication device. The first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 302, the first communication device transmits a second message, wherein the second message is used for a deactivation operation for an AI/ML model.

The second communication device receives the second message from the first communication device. In some embodiments, the second message may be any one of a unicast message, a multicast message, or a broadcast message.

Implementation 1: In a case where the AI/ML model identifier adopts definition 1 or definition 2, the AI/ML model identifier field contained in the AI/ML model deactivation information field of the second message has only one information format, i.e., the definition format of the AI/ML model identifier.

That is, the second message includes an AI/ML model deactivation information field, wherein the AI/ML model deactivation information field includes an AI/ML model identifier field. In a case where the AI/ML model identifier includes one information field, the information format of the AI/ML model identifier field contained in the AI/ML model deactivation information field is the definition format of the AI/ML model identifier.

Implementation 2: In a case where the AI/ML model identifier adopts definition 3 (including definition 3-1 or definition 3-2), the information format of the AI/ML model identifier field contained in the AI/ML model deactivation information field of the second message includes up to 2 to (2ⁿ-1) types, wherein n represents the number of information fields in the definition of the AI/ML model identifier.

That is, the second message includes an AI/ML model deactivation information field, wherein the AI/ML model deactivation information field includes an AI/ML model identifier field. In a case where the AI/ML model identifier includes at least two information fields, the information format of the AI/ML model identifier field contained in the AI/ML model deactivation information field includes up to (2ⁿ-1) types, wherein n is the number of information fields in the AI/ML model identifier.

In some embodiments, regardless of which definition (any one of definition 1 to definition 3) the AI/ML model identifier adopts, the AI/ML model deactivation information field in the second message further includes at least one other information field (information fields other than the AI/ML model identifier information field), each of the at least one other information field containing at least one of information 2 to information 17 described above. In some embodiments, each of the least one other information field may also contain at least one of cell identity information, frequency point identity information, or BWP identity information.

In some embodiments, each of the at least one other information field in the AI/ML model deactivation information field is an optional field or a mandatory field. Assuming that the AI/ML model deactivation information field includes m (m is a natural number) other information fields, the information format of the AI/ML model deactivation information field in the second message includes up to (2^{n+m}-1) types, wherein n is the number of information fields in the AI/ML model identifier.

Exemplarily, the first communication device may flexibly choose which information format of the AI/ML model deactivation information field to use to deactivate the corresponding AI/ML model in the second communication device according to actual needs. For example, the AI/ML model identifier is defined as in Table 1, in a case where only one type of AI/ML model associated with information field 1 is present in the second communication device, the AI/ML model deactivation information field transmitted by the first communication device only needs to include AI/ML model identifier information field 1, and information field 2, information 3, and other information fields may be omitted. In a case where at least two types of AI/ML models associated with information field 1 is present in the second communication device, the AI/ML model deactivation information field transmitted by the first communication device needs to include AI/ML model identifier information field 1 and also needs to adaptively include at least one of information field 2, information field 3, and other information fields according to the model differentiation requirements.

Exemplarily, the information format of the AI/ML model deactivation information field includes: y information fields among at least one information field (including the case of other information fields) being mandatory fields of the AI/ML model deactivation information field, and the information fields other than the y information fields among the at least one information field being optional fields of the AI/ML model deactivation information field, wherein y is a positive integer.

That is, in the format definition of the AI/ML model deactivation information field included in the second message in Implementation 2, at least one field is a mandatory field, and the remaining fields are optional fields.

It should be noted that in a case where the definition of the AI/ML model identifier includes n information fields and the AI/ML model deactivation information field further includes m other information fields, the information format of the AI/ML model deactivation information field included in the second message in Implementation 2 may theoretically include up to (2^{n+m}-1) types. However, considering the effectiveness of practical applications, some formats are meaningless. For example, the format lacking information field 1 in Table 3 fails to be associated with functional feature, and the second communication device is incapable of determining which AI/ML model for a specific function needs to be deactivated. Obviously, such formats need to be excluded. The specific format definition of the information format of the AI/ML model deactivation information field in the second message may be explicitly provided by protocol default, but at least one format needs to be defined.

In some embodiments, the second message is used for deactivating at least one AI/ML model. That is, the types (number) of AI/ML models deactivated by using the second message may be one or more.

In some embodiments, the second message is a dedicated message for deactivation of the AI/ML model. For example, the second message may be referred to as a model deactivation message.

Alternatively, the second message is a general message for AI/ML model control, and the second message includes an AI/ML model deactivation information field for the deactivation operation. For example, the second message may be referred to as a model control message. The model control message includes multiple AI/ML model control information fields corresponding to different control operations, for example, an AI/ML model deactivation information field corresponding to the deactivation operation.

It should be noted that the second message is different from the first message (in a case where these messages are different messages, the different messages themselves may be used for distinguishing a model activation operation or a deactivation operation).

Alternatively, the second message is the same as the first message (in a case where they are the same message, the model activation and deactivation operations need to be distinguished based on different information fields of the same message). In a case where the first message is the same as the second message, the activation operation and the deactivation operation correspond to different information fields. At this time, the first message or the second message is used for activating at least one AI/ML model and/or deactivate at least one AI/ML model. Table 5 provides an example of a first message:

**Table 5 Schematic implementation of model activation and deactivation operations using different information fields of the same message**

| | |
|---|---|
| The first message includes the following information fields | |
| AI/ML model identifier of at least one | AI/ML model identifier of at least one |
| AI/ML model to be activated | AI/ML model to be deactivated |

In Table 5, the AI/ML model identifier may adopt any of the definitions, for example, the definition in Table 3 or Table 4, which is not described herein any further. Specifically, the first information field included in the first message (i.e., the AI/ML model identifier of at least one AI/ML model to be activated) is used for activating at least one AI/ML model, and the second information field included in the first message (i.e., the AI/ML model identifier of at least one AI/ML model to be deactivated) is used for deactivating at least one AI/ML model. In some embodiments, the first information field and the second information field are both optional information fields of the first message (general message for control of the AI/ML model).

In summary, in the method according to the embodiments, the deactivation operation for the specified AI/ML model is achieved by transmitting a second message carrying the AI/ML model identifier.

### Function 3: switching

FIG. 6 is a flowchart of a method for controlling models according to some embodiments of the present disclosure. The method may be applicable to a communication system including a first communication device and a second communication device. The first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 303, the first communication device transmits a third message, wherein the third message is used for the switching operation for the AI/ML model (model switching).

The second communication device receives the third message from the first communication device. In some embodiments, the third message may be any one of a unicast message, a multicast message, or a broadcast message.

Model switching usually involves activating one model while deactivating another model. The specific implementations are as follows:

Implementation 1: The model switching is achieved based on AI/ML model activation and deactivation functions.

In this implementation, the model activation and deactivation functions are implemented by using different information fields of the same message, i.e., the implementation corresponding to Table 5, where model switching is indirectly achieved based on model activation and deactivation functions without the need for additional messages or information fields.

That is, the third message includes an AI/ML model activation information field and an AI/ML model deactivation information field. The AI/ML model activation information field includes AI/ML model identifier of at least one AI/ML model that needs to be activated. The AI/ML model deactivation information field includes AI/ML model identifier of at least one AI/ML model that needs to be deactivated.

Implementation 2: The model switching is achieved based on AI/ML model activation function.

In this implementation, the model switching is achieved based on the AI/ML model activation function, and the second communication device itself determines which AI/ML model needs to be deactivated simultaneously. For example, the protocol stipulates that the model identifier corresponding to the AI/ML model used for positioning function in LoS scenarios is ID 31, the model identifier corresponding to the AI/ML model used for positioning function in NLoS scenarios is ID 32, and the model identifier corresponding to the AI/ML model used for positioning function in LoS and NLoS mixed scenarios is ID 33. Only one positioning model can be activated at a time. Initially, the second communication device uses the positioning model with model identifier ID 32, and then receives a third message with an AI/ML model activation information field requesting the activation of the positioning model with model identifier ID 33. Since one positioning model has already been activated in the second communication device, the second communication device actively deactivates the previously used positioning model while activating another positioning model.

That is, the third message includes an AI/ML model activation information field. The AI/ML model activation information field includes AI/ML model identifier of at least one AI/ML model that needs to be activated.

In summary, in the method according to the embodiments, the switching operation for the specified AI/ML model is achieved by transmitting a third message carrying the AI/ML model identifier.

### Function 4: deletion

FIG. 7 is a flowchart of a method for controlling models according to some embodiments of the present disclosure. The method may be applicable to a communication system including a first communication device and a second communication device. The first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 304, the first communication device transmits a fourth message, wherein the fourth message is used for a deletion operation for an AI/ML model.

The second communication device receives the fourth message from the first communication device. In some embodiments, the fourth message may be any one of a unicast message, a multicast message, or a broadcast message.

Implementation 1: In a case where the AI/ML model identifier adopts definition 1 or definition 2, the AI/ML model identifier field contained in the AI/ML model deletion information field of the fourth message has only one information format, i.e., the definition format of the AI/ML model identifier.

That is, the fourth message includes an AI/ML model deletion information field, wherein the AI/ML model deletion information field includes an AI/ML model identifier field. In a case where the AI/ML model identifier includes one information field, the information format of the AI/ML model identifier field contained in the AI/ML model deletion information field is the definition format of the AI/ML model identifier.

Implementation 2: In a case where the AI/ML model identifier adopts definition 3 (including definition 3-1 or definition 3-2), the information format of the AI/ML model identifier field contained in the AI/ML model deletion information field of the fourth message includes up to 2 to (2ⁿ-1) types, wherein n represents the number of information fields in the definition of the AI/ML model identifier.

That is, the fourth message includes an AI/ML model deletion information field, wherein the AI/ML model deletion information field includes an AI/ML model identifier field. In a case where the AI/ML model identifier includes at least two information fields, the information format of the AI/ML model identifier field contained in the AI/ML model deletion information field includes up to (2ⁿ-1) types, wherein n represents the number of information fields in the AI/ML model identifier.

In some embodiments, regardless of which definition (any one of definition 1 to definition 3) the AI/ML model identifier adopts, the AI/ML model deletion information field in the fourth message further includes at least one other information field (information fields other than the AI/ML model identifier information field), each of the at least one other information field containing at least one of information 2 to information 17 described above. In some embodiments, each of the least one other information field may also contain at least one of cell identity information, frequency point identity information, or BWP identity information.

In some embodiments, each of the at least one other information field in the AI/ML model deletion information field is an optional field or a mandatory field. Assuming that the AI/ML model deletion information field includes m (m is a natural number) other information fields, then the information format of the AI/ML model deletion information field in the fourth message includes up to (2^{n+m}-1) types, wherein n represents the number of information fields in the AI/ML model identifier.

Exemplarily, the first communication device may flexibly choose which information format of the AI/ML model deletion information field to use to delete the corresponding AI/ML model in the second communication device according to actual needs. For example, the AI/ML model identifier is defined as in Table 1, in a case where only one type of AI/ML model associated with information field 1 is present in the second communication device, the AI/ML model deletion information field transmitted by the first communication device only needs to include AI/ML model identifier information field 1, and information field 2, information 3, and other information fields may be omitted. In a case where at least two types of AI/ML models associated with information field 1 is present in the second communication device, the AI/ML model deletion information field transmitted by the first communication device needs to include AI/ML model identifier information field 1 and also needs to adaptively include at least one of information field 2, information field 3, and other information fields according to the model differentiation requirements.

Exemplarily, the information format of the AI/ML model deletion information field includes: z information fields among at least one information field (including the case of other information fields) being mandatory fields of the AI/ML model deletion information field, and the information fields other than the z information fields among the at least one information field being optional fields of the AI/ML model deletion information field, wherein z is a positive integer.

That is, in the format definition of the AI/ML model deletion information field included in the fourth message in Implementation 2, at least one field is a mandatory field, and the remaining fields are optional fields.

It should be noted that in a case where the definition of the AI/ML model identifier includes n information fields and the AI/ML model deletion information field further includes m other information fields, the information format of the AI/ML model deletion information field included in the fourth message in Implementation 2 may theoretically include up to (2^{n+m}-1) types. However, considering the effectiveness of practical applications, some formats are meaningless. For example, the format lacking information field 1 in Table 3 fails to be associated with functional feature, and the second communication device is incapable of determining which AI/ML model for a specific function needs to be deleted. Obviously, such formats need to be excluded. The specific format definition of the information format of the AI/ML model deletion information field in the fourth message may be explicitly provided by protocol default, but at least one format needs to be defined.

In some embodiments, the fourth message is used for deleting at least one AI/ML model. That is, the types (number) of AI/ML models deleted by using the fourth message may be one or more.

In some embodiments, the fourth message is a dedicated message for deletion of the AI/ML model. For example, the fourth message may be referred to as a model deletion message.

Alternatively, the fourth message is a general message for AI/ML model control, and the fourth message includes an AI/ML model deletion information field for the deletion operation. For example, the fourth message may be referred to as a model control message. The model control message includes multiple AI/ML model control information fields corresponding to different control operations, for example, an AI/ML model deletion information field corresponding to the deletion operation.

It should be noted that the fourth message is different from the first message (in a case where these messages are different messages, the different messages themselves may be used for distinguishing a model activation operation or a deletion operation).

Alternatively, the fourth message is the same as the first message (in a case where they are the same message, the model activation and deletion operations need to be distinguished based on different information fields of the same message). In a case where the first message is the same as the fourth message, the activation operation and the deletion operation correspond to different information fields. At this time, the first message or the fourth message is used for activating at least one AI/ML model and/or delete at least one AI/ML model. Table 6 provides an example of a first message:

**Table 6 Schematic implementation of model activation and deletion operations using different information fields of the same message**

| The first message includes the following information fields | |
|---|---|
| AI/ML model identifier of at least one | AI/ML model identifier of at least one |
| AI/ML model to be activated | AI/ML model to be deleted |

In Table 6, the AI/ML model identifier may adopt any of the definitions, for example, the definition in Table 3 or Table 4, which is not described herein any further. Specifically, the first information field included in the first message (i.e., the AI/ML model identifier of at least one AI/ML model to be activated) is used for activating at least one AI/ML model, and the third information field included in the first message (i.e., the AI/ML model identifier of at least one AI/ML model to be deleted) is used for deleting at least one AI/ML model. In some embodiments, the first information field and the third information field are both optional information fields of the first message (general message for AI/ML model control).

In some embodiments, the deactivation operation for the model may also be implemented together with the activation operation and the deletion operation using different information fields of the same message, i.e., combining Table 5 and Table 6, the first message includes the first information field, the second information field, and the third information field, which is not described herein any further.

In summary, in the method according to the embodiments, the deletion operation for the specified AI/ML model is achieved by transmitting a fourth message carrying the AI/ML model identifier.

Function 5: acquiring AI/ML model-related information associated with the second communication device

FIG. 8 is a flowchart of a method for controlling models according to some embodiments of the present disclosure. The method may be applicable to a communication system including a first communication device and a second communication device. The first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 306, the second communication device transmits a fifth message, wherein the fifth message includes AI/ML model-related information associated with the second communication device, the AI/ML model-related information including an AI/ML model identifier and/or AI/ML model description information.

The first communication device receives the fifth message from the second communication device. In some embodiments, the fifth message may be any one of a unicast message, a multicast message, or a broadcast message.

In some embodiments, in a case where the first communication device is a terminal device or an access network device (first access network device), and the second communication device is an access network device (second access network device), the AI/ML model-related information includes AI/ML model-related information associated with the serving cell and/or AI/ML model-related information associated with at least one neighboring cell of the serving cell. Generally, the cell that transmits the fifth message to the first communication device is referred to as the serving cell or source cell. Each cell may provide AI/ML model-related information associated with its own cell and/or AI/ML model-related information associated with at least one neighboring cell of its own cell. In some embodiments, the AI/ML model-related information associated with at least one neighboring cell may be configured based on the frequency point granularity or cell granularity, wherein configuration based on the frequency point granularity indicates that one or a group of frequency point identities is associated with a set of AI/ML model-related information, and configuration based on the cell granularity indicates that one or a group of cell identities is associated with a set of AI/ML model-related information. The cell identity may be any of: a cell global identifier (CGI), a serving cell index, or a combination of a frequency point and a physical cell identifier (PCI). In some embodiments, the message for transmitting AI/ML model-related information associated with the serving cell may be different from or the same as the message for transmitting AI/ML model-related information associated with at least one neighboring cell of the serving cell.

That is, the transmitter of the fifth message is the second communication device. In a case where the first communication device is a terminal device or first access network device, and the second communication device is a second access network device, the AI/ML model-related information includes AI/ML model-related information associated with the serving cell and/or AI/ML model-related information associated with at least one neighboring cell of the serving message. In some embodiments, the AI/ML model-related information associated with at least one neighboring cell is configured based on the frequency point granularity or cell granularity.

In some embodiments, in a case where the first communication device is a core network device, and the second communication device is an access network device, the AI/ML model-related information is configured based on the access network granularity or TAC granularity. The configuration based on the access network granularity indicates that one or a group of access network device identities is associated with a set of AI/ML model-related information (for example, one gNB identity is associated with a set of AI/ML model-related information), and configuration based on the TAC granularity indicates that one or a group of TAC identities is associated with a set of AI/ML model-related information.

That is, the transmitter of the fifth message is the second communication device. In a case where the first communication device is a core network device, and the second communication device is an access network device, the AI/ML model-related information is configured based on the access network granularity or TAC granularity.

In some embodiments, in a case where the first communication device is a terminal device or an access network device or a core network device (first core network device), and the second communication device is a core network device (second core network device), the AI/ML model-related information is configured based on the core network granularity or TAC granularity. The configuration based on the core network granularity indicates that one core network device is associated with a set of AI/ML model-related information (for example, one AMF device is associated with a set of AI/ML model-related information), and configuration based on the TAC granularity indicates that one or a group of TAC identities is associated with a set of AI/ML model-related information.

That is, the transmitter of the fifth message is the second communication device. In a case where the first communication device is a terminal device or access network device or first core network device, and the second communication device is a second core network device, the AI/ML model-related information is configured based on the core network granularity or TAC granularity.

In some embodiments, in a case where the first communication device is a terminal device (first terminal device) or an access network device or a core network device, and the second communication device is a terminal device (second terminal device), the AI/ML model-related information is configured based on the terminal granularity, wherein configuration at the terminal granularity indicates that one terminal device is associated with a set of AI/ML model-related information.

That is, the transmitter of the fifth message is the second communication device. In a case where the first communication device is a first terminal device or an access network device or a core network device, and the second communication device is a second terminal device, the AI/ML model-related information is configured based on the terminal device granularity.

In some embodiments, as illustrated in FIG. 8, prior to process 306, the method further includes process 305.

In some embodiments, in process 305, the first communication device transmits a sixth message, wherein the sixth message is used for requesting the second communication device to provide AI/ML model-related information.

The second communication device receives the sixth message from the first communication device. In some embodiments, the sixth message may be any one of a unicast message, a multicast message, or a broadcast message.

In some embodiments, the sixth message includes at least one AI/ML model identifier. In some embodiments, the fifth message is a response message to the sixth message. In some embodiments, the second communication device may also refuse the sixth message transmitted by the first communication device, i.e., refuse to provide AI/ML model-related information to the first communication device.

In some embodiments, as illustrated in FIG. 8, subsequent to process 306, the method further includes process 307.

In some embodiments, in process 307, the first communication device transmits a seventh message, wherein the seventh message includes AI/ML model-related information associated with the first communication device, the AI/ML model-related information including an AI/ML model identifier and/or AI/ML model description information.

The second communication device receives the seventh message from the first communication device. In some embodiments, the seventh message may be any one of a unicast message, a multicast message, or a broadcast message.

In some embodiments, the seventh message is a response message to the fifth message, or the seventh message is a message actively transmitted by the first communication device to the second communication device.

The definition of the AI/ML model identifier contained in the fifth message or the seventh message may adopt any of the definitions described in the above embodiments, which is not be described herein any further.

In summary, in the method according to the embodiments, AI/ML model-related information associated with the second communication device is provided to the first communication device by transmitting the fifth message. AI/ML model-related information associated with the second communication device is acquired based on AI/ML model identifier, which facilitates mobility management based on AI/ML models and enhances the user switching experience.

Function 6: acquiring AI/ML model-related information upon local mapping by the second communication device

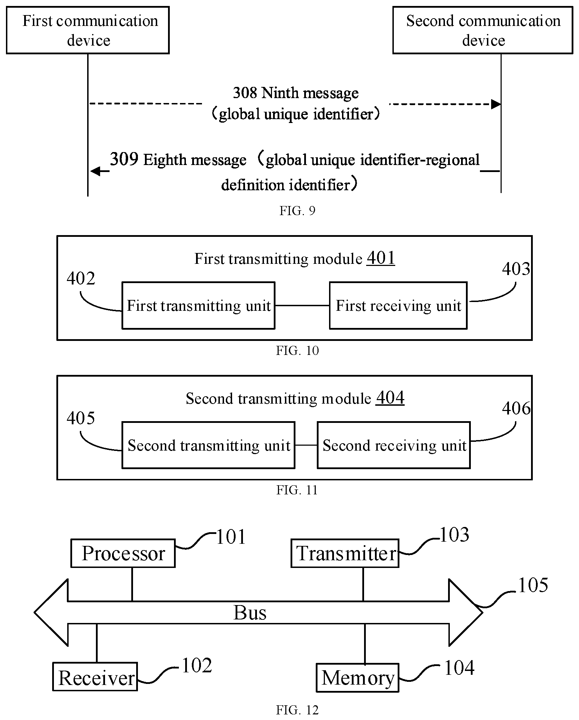

Due to the existence of two usage methods for AI/ML model identifier, namely global unique identifier and regional definition identifier, to achieve the localization mapping of global unique identifier in any operator network (i.e., to establish the mapping relationship between global unique identifier and regional definition identifier), the embodiment of the present disclosure provides a method for controlling models as illustrated in FIG. 9.

FIG. 9 is a flowchart of a method for controlling models according to some embodiments of the present disclosure. The method may be applicable to a communication system including a first communication device and a second communication device. The first communication device may be one of the terminal device, the access network device, or the core network device in the system architecture illustrated in FIG. 1, and the second communication device may be one of the terminal device, the access network device, or the core network device in the system architecture illustrated in FIG. 1. The method includes the following process.

In process 309, the second communication device transmits an eighth message, wherein the eighth message includes at least one AI/ML model identifier defined using the global unique identifier and at least one AI/ML model identifier defined using the regional definition identifier. A one-to-one, one-to-many, or many-to-one association relationship is present between at least one AI/ML model identifier defined using the global unique identifier and at least one AI/ML model identifier defined using the regional definition identifier.

That is, one AI/ML model identifier defined using the global unique identifier is associated with one AI/ML model identifier defined using the regional definition identifier; or one AI/ML model identifier defined using the global unique identifier is associated with a group of AI/ML model identifiers defined using the regional definition identifier; or a group of AI/ML model identifiers defined using the global unique identifier is associated with one AI/ML model identifier defined using the regional definition identifier. The two types of AI/ML model identifiers with the association relationship may be equivalently processed.

The first communication device receives the eighth message from the second communication device. In some embodiments, the eighth message may be any one of a unicast message, a multicast message, or a broadcast message.

In some embodiments, the eighth message further includes AI/ML model-related information associated with each AI/ML model identifier or each group of AI/ML model identifiers defined using the regional definition identifier.

In some embodiments, in a case where the first communication device leaves the effective area of the regional definition identifier supported by the second communication device, the first communication device requests the second communication device to update the mapping relationship, or another second communication device actively triggers the process to update the mapping relationship.

That is, in a case where the first communication device leaves the effective area of the regional definition identifier supported by the second communication device, the second communication device actively triggers the update process and transmits the eighth message to the first communication device. The first communication device receives the eighth message actively triggered by the second communication device. Exemplarily, the second communication device may be different device of the same type as the second communication device in process 309. For example, the second communication device that initially transmits the eighth message to the first communication device is the second access network device, and the second communication device that triggers the update process and transmits the eighth message to the first communication device again is the third access network device.

Alternatively, in a case where the first communication device leaves the effective area of the regional definition identifier supported by the second communication device, the first communication device transmits a tenth message, wherein the tenth message is used for requesting the update of the mapping relationship between at least one AI/ML model identifier defined using the global unique identifier and at least one AI/ML model identifier defined using the regional definition identifier. The second communication device receives the tenth message and responds to the tenth message by transmitting the eighth message to the first communication device to update the mapping relationship.

In some embodiments, as illustrated in FIG. 9, prior to process 309, the method further includes process 308.

In some embodiments, in process 308, the first communication device transmits a ninth message, wherein the ninth message includes at least one AI/ML model identifier defined using the global unique identifier.

The second communication device receives the ninth message from the first communication device. In some embodiments, the ninth message may be any one of a unicast message, a multicast message, or a broadcast message.

In some embodiments, the ninth message further includes AI/ML model-related information associated with each AI/ML model identifier defined using the global unique identifier.

In some embodiments, the eighth message is a response message to the ninth message, or the eighth message is a message actively triggered by the message transmitter (second communication device).

In summary, in the method according to the embodiments, AI/ML model-related information upon local mapping by the second communication device is provided to the first communication device by transmitting the eighth message. AI/ML model-related information upon local mapping by the second communication device is acquired based on AI/ML model identifier, which facilitates the regional application of AI/ML functions while achieving regional roaming based on AI/ML features, and hence users are allowed to continue using AI/ML features to optimize communication performance after regional roaming.

It should be noted that the method processes in the above embodiments may be arbitrarily combined to obtain new embodiments, which is not limited in the present disclosure.

FIG. 10 illustrates a structural block diagram of an apparatus for controlling models according to some embodiments of the present disclosure. The apparatus may be implemented as a first communication device or as part of a first communication device.

The apparatus includes a first transmitting module 401, configured to transmit a model control message, wherein the model control message is used for controlling an AI/ML model, and the model control message includes an AI/ML model identifier of the AI/ML model.

In some embodiments, an association relationship is present between the AI/ML model identifier and the AI/ML model description information associated with the AI/ML model.

In some embodiments, the AI/ML model description information includes at least one of:
information 1: a functional feature associated with the AI/ML model;
information 2: type information of an input parameter required by the AI/ML model;
information 3: format requirement information of an input parameter required by the AI/ML model;
information 4: a preprocessing rule for an input parameter required by the AI/ML model;
information 5: type information of an output parameter required by the AI/ML model;
information 6: format requirement information of an output parameter required by the AI/ML model;
information 7: a preprocessing rule for an output parameter required by the AI/ML model;
information 8: application scenario information of the AI/ML model;
information 9: deployment location information of the AI/ML model;
information 10: a capability requirement for using the AI/ML model;
information 11: performance monitoring indicator information of the AI/ML model;
information 12: attribution information of the AI/ML model;
information 13: effective usage range information of the AI/ML model;
information 14: generalization feature information of the AI/ML model;
information 15: version number information of algorithm data of the AI/ML model;
information 16: precision level information of an algorithm of the AI/ML model;
information 17: compilation or storage format information of algorithm data of the AI/ML model.

In some embodiments, the AI/ML model identifier includes one information field, and the AI/ML model identifier is associated with information 1.

In some embodiments, the AI/ML model identifier includes one information field, the AI/ML model identifier is associated with information 1, and the AI/ML model identifier is further associated with at least one of information 2 to information 17.

In some embodiments, the AI/ML model identifier includes at least two information fields, wherein each of the at least two information fields is associated with at least one of information 1 to information 17.

In some embodiments, the at least two information fields include a first information field and at least one additional information field. The first information field is associated with the information 1. Each of the at least one additional information field is associated with at least one of information 2 to information 17.

In some embodiments, the at least two information fields include a first information field and at least one additional information field. The first information field is associated with information 1, and the first information field is further associated with at least one of information 2 to information 17. Each of the at least one additional information field is associated with at least one of information 2 to information 17.

In some embodiments, the AI/ML model identifier is a global unique identifier or a regional definition identifier.

In some embodiments, the first transmitting module 401 includes: a first transmitting unit 402, configured to transmit a first message, wherein the first message is used for the activation operation for the AI/ML model.

In some embodiments, the first message includes an AI/ML model activation information field. The AI/ML model activation information field includes an AI/ML model identifier field.

In a case where the AI/ML model identifier includes one information field, the information format of the AI/ML model identifier field contained in the AI/ML model activation information field is the definition format of the AI/ML model identifier.

In some embodiments, the first message includes an AI/ML model activation information field. The AI/ML model activation information field includes an AI/ML model identifier field;

In a case where the AI/ML model identifier includes at least two information fields, the information format of the AI/ML model identifier field contained in the AI/ML model activation information field includes up to (2ⁿ-1) types, wherein n is the number of information fields in the AI/ML model identifier.

In some embodiments, the AI/ML model activation information field further includes at least one other information field, and each of the at least one other information field contains at least one of information 2 to information 17.

In some embodiments, the AI/ML model activation information field includes at least one information field, and the information format of the AI/ML model activation information field includes: x information fields among the at least one information field being mandatory fields of the AI/ML model activation information field, and the information fields other than the x information fields among the at least one information field being optional fields of the AI/ML model activation information field, wherein x is a positive integer.

In some embodiments, the first message is used for activating at least one AI/ML model.

In some embodiments, the first message is a dedicated message for AI/ML model activation; or the first message is a general message for AI/ML model control, and the first message includes an AI/ML model activation information field for the activation operation.

In some embodiments, the first transmitting module 401 includes a first transmitting unit 402, configured to transmit a second message, wherein the second message is used for the deactivation operation for the AI/ML model.

In some embodiments, the second message includes an AI/ML model deactivation information field. The AI/ML model deactivation information field includes an AI/ML model identifier field.

In a case where the AI/ML model identifier includes one information field, the information format of the AI/ML model identifier field contained in the AI/ML model deactivation information field is the definition format of the AI/ML model identifier.

In some embodiments, the second message includes an AI/ML model deactivation information field, and the AI/ML model deactivation information field includes an AI/ML model identifier field.

In a case where the AI/ML model identifier includes at least two information fields, the information format of the AI/ML model identifier field contained in the AI/ML model deactivation information field includes up to (2ⁿ-1) types, wherein n is the number of information fields in the AI/ML model identifier.

In some embodiments, the AI/ML model deactivation information field further includes at least one other information field, and each of the at least one other information field contains at least one of information 2 to information 17.

In some embodiments, the AI/ML model deactivation information field includes at least one information field, and the information format of the AI/ML model deactivation information field includes: y information fields among the at least one information field being mandatory fields of the AI/ML model deactivation information field, and the information fields other than the y information fields among the at least one information field being optional fields of the AI/ML model deactivation information field, wherein y is a positive integer.

In some embodiments, the second message is used for deactivating at least one AI/ML model.

In some embodiments, the second message is a dedicated message for deactivation of the AI/ML model; or the second message is a general message for AI/ML model control, and the second message includes an AI/ML model deactivation information field for the deactivation operation.

In some embodiments, the first transmitting module 401 includes: a first transmitting unit 402, configured to transmit a third message, wherein the third message is used for the switching operation for the AI/ML model.

In some embodiments, the third message includes an AI/ML model activation information field and an AI/ML model deactivation information field.

The AI/ML model activation information field includes the AI/ML model identifier of at least one AI/ML model that needs to be activated.

The AI/ML model deactivation information field includes the AI/ML model identifier of at least one AI/ML model that needs to be deactivated.

In some embodiments, the third message includes an AI/ML model activation information field.

The AI/ML model activation information field includes the AI/ML model identifier of at least one AI/ML model that needs to be activated.

In some embodiments, the first transmitting module 401 includes: a first transmitting unit 402, configured to transmit a fourth message, wherein the fourth message is used for the deletion operation for the AI/ML model.

In some embodiments, the fourth message includes an AI/ML model deletion information field. The AI/ML model deletion information field includes an AI/ML model identifier field;

In a case where the AI/ML model identifier includes one information field, the information format of the AI/ML model identifier field contained in the AI/ML model deletion information field is the definition format of the AI/ML model identifier.

In some embodiments, the fourth message includes an AI/ML model deletion information field, and the AI/ML model deletion information field includes an AI/ML model identifier field.

In a case where the AI/ML model identifier includes at least two information fields, the information format of the AI/ML model identifier field contained in the AI/ML model deletion information field includes up to (2ⁿ-1) types, where n is the number of information fields in the AI/ML model identifier.

In some embodiments, the AI/ML model deletion information field further includes at least one other information field, and each of the at least one other information field contains at least one of information 2 to information 17.

In some embodiments, the AI/ML model deletion information field includes at least one information field, and the information format of the AI/ML model deletion information field includes: z information fields among the at least one information field being mandatory fields of the AI/ML model deletion information field, and the information fields other than the z information fields among the at least one information field being optional fields of the AI/ML model deletion information field, wherein z is a positive integer.

In some embodiments, the fourth message is used for deleting at least one AI/ML model.

In some embodiments, the fourth message is a dedicated message for deletion of the AI/ML model; or the fourth message is a general message for AI/ML model control, and the fourth message includes an AI/ML model deletion information field for the deletion operation.

In some embodiments, the first transmitting module 401 includes: a first receiving unit 403, configured to receive a fifth message, wherein the fifth message includes AI/ML model-related information associated with the second communication device. The AI/ML model-related information includes AI/ML model identifier and/or AI/ML model description information.

In some embodiments, the first transmitting module 401 includes a first transmitting unit 402, configured to transmit a sixth message, wherein the sixth message is used for requesting the second communication device to provide AI/ML model-related information.

In some embodiments, the first transmitting module 401 includes a first transmitting unit 402, configured to transmit a seventh message, wherein the seventh message includes AI/ML model-related information associated with the first communication device.

In some embodiments, the transmitter of the fifth message is the second communication device. In a case where the first communication device is a terminal device or first access network device, and the second communication device is a second access network device, the AI/ML model-related information includes AI/ML model-related information associated with the serving cell and/or AI/ML model-related information associated with at least one neighboring cell of the serving message.

In some embodiments, the AI/ML model-related information associated with at least one neighboring cell is configured based on the frequency point granularity or cell granularity.

In some embodiments, the transmitter of the fifth message is the second communication device. In a case where the first communication device is a core network device, and the second communication device is an access network device, the AI/ML model-related information is configured based on the access network granularity or TAC granularity.

In some embodiments, the transmitter of the fifth message is the second communication device. In a case where the first communication device is a terminal device or access network device or first core network device, and the second communication device is a second core network device, the AI/ML model-related information is configured based on the core network granularity or TAC granularity.

In some embodiments, the transmitter of the fifth message is the second communication device. In a case where the first communication device is a first terminal device or an access network device or a core network device, and the second communication device is a second terminal device, the AI/ML model-related information is configured based on the terminal device granularity.

In some embodiments, the first transmitting module 401 includes: a first receiving unit 403, configured to receive an eighth message. The eighth message includes at least one AI/ML model identifier defined using the global unique identifier and at least one AI/ML model identifier defined using the regional definition identifier.

A one-to-one, one-to-many, or many-to-one association relationship is present between at least one AI/ML model identifier defined using the global unique identifier and at least one AI/ML model identifier defined using the regional definition identifier.

In some embodiments, the eighth message further includes AI/ML model-related information associated with each AI/ML model identifier or each group of AI/ML model identifiers defined using the regional definition identifier.

In some embodiments, the first transmitting module 401 includes a first transmitting unit 402, configured to transmit a ninth message. The ninth message includes at least one AI/ML model identifier defined using the global unique identifier.

In some embodiments, the ninth message further includes AI/ML model-related information associated with each AI/ML model identifier defined using the global unique identifier.

In some embodiments, the eighth message is a response message to the ninth message, or the eighth message is a message actively triggered by the second communication device.

In some embodiments, the transmitter of the eighth message is the second communication device, and the first transmitting module 401 includes a first receiving unit 403, configured to receive the eighth message actively triggered by the second communication device in a case where the first communication device leaves the effective area of the regional definition identifier supported by the second communication device.

In some embodiments, the transmitter of the eighth message is the second communication device, and the first transmitting module 401 includes a first transmitting unit 402, configured to transmit a tenth message in a case where the first communication device leaves the effective area of the regional definition identifier supported by the second communication device. The tenth message is used for requesting to update the mapping relationship between at least one AI/ML model identifier defined using the global unique identifier and at least one AI/ML model identifier defined using the regional definition identifier.

In some embodiments, the model control message is a unicast message, a multicast message, or a broadcast message.

In some embodiments, the model control message is any one of: a NAS message, an RRC message, a MAC CE message, a DCI message, a UCI message, a PUSCH message, an inter-node message, an Xn message, an F1 message, an E1 message, an NG message, or a core network bus message.

In some embodiments, the first transmitting module 401 is configured to transmit the model control message to the second communication device. The first communication device is a terminal device, and the second communication device is a network device; or the first communication device is a network device, and the second communication device is a terminal device; or the first communication device is a first terminal device, and the second communication device is a second terminal device; or the first communication device is a first network device, and the second communication device is a second network device.

FIG. 11 shows a structural block diagram of an apparatus for controlling models according to some embodiments of the present disclosure. The apparatus may be implemented as a second communication device or as part of a second communication device.

The apparatus includes a second transmitting module 404, configured to transmit a model control message, wherein the model control message is used for controlling an AI/ML model, and the model control message includes an AI/ML model identifier of the AI/ML model.

In some embodiments, an association relationship is present between the AI/ML model identifier and the AI/ML model description information associated with the AI/ML model.

In some embodiments, the AI/ML model description information includes at least one of:
information 1: a functional feature associated with the AI/ML model;
information 2: type information of an input parameter required by the AI/ML model;
information 3: format requirement information of an input parameter required by the AI/ML model;
information 4: a preprocessing rule for an input parameter required by the AI/ML model;
information 5: type information of an output parameter required by the AI/ML model;
information 6: format requirement information of an output parameter required by the AI/ML model;
information 7: a preprocessing rule for an output parameter required by the AI/ML model;
information 8: application scenario information of the AI/ML model;
information 9: deployment location information of the AI/ML model;
information 10: a capability requirement for using the AI/ML model;
information 11: performance monitoring indicator information of the AI/ML model;
information 12: attribution information of the AI/ML model;
information 13: effective usage range information of the AI/ML model;
information 14: generalization feature information of the AI/ML model;
information 15: version number information of algorithm data of the AI/ML model;
information 16: precision level information of an algorithm of the AI/ML model;
information 17: compilation or storage format information of algorithm data of the AI/ML model.

In some embodiments, the AI/ML model identifier includes one information field, and the AI/ML model identifier is associated with information 1.

In some embodiments, the AI/ML model identifier includes one information field, and the AI/ML model identifier is associated with information 1, and the AI/ML model identifier is also associated with at least one of information 2 to information 17.

In some embodiments, the AI/ML model identifier includes at least two information fields. Each of the at least two information fields is associated with at least one of information 1 to information 17.

In some embodiments, the at least two information fields include a first information field and at least one additional information field. The first information field is associated with information 1. Each of the at least one additional information field is associated with at least one of information 2 to information 17.

In some embodiments, the at least two information fields include a first information field and at least one additional information field. The first information field is associated with information 1, and the first information field is also associated with at least one of information 2 to information 17. Each of the at least one additional information field is associated with at least one of information 2 to information 17.

In some embodiments, the AI/ML model identifier is a global unique identifier or a regional definition identifier.

In some embodiments, the second transmitting module 404 includes a second receiving unit 406, configured to receive a first message, wherein the first message is used for the activation operation for the AI/ML model.

In some embodiments, the first message includes an AI/ML model activation information field, and the AI/ML model activation information field includes an AI/ML model identifier field.

In a case where the AI/ML model identifier includes one information field, the information format of the AI/ML model identifier field contained in the AI/ML model activation information field is the definition format of the AI/ML model identifier.

In some embodiments, the first message includes an AI/ML model activation information field, and the AI/ML model activation information field includes an AI/ML model identifier field.

In a case where the AI/ML model identifier includes at least two information fields, the information format of the AI/ML model identifier field contained in the AI/ML model activation information field includes up to (2ⁿ-1) types, wherein n is the number of information fields in the AI/ML model identifier.

In some embodiments, the AI/ML model activation information field further includes at least one other information field, and each of the at least one other information field contains at least one of information 2 to information 17.

In some embodiments, the AI/ML model activation information field includes at least one information field, and the information format of the AI/ML model activation information field includes: x information fields among the at least one information field being mandatory fields of the AI/ML model activation information field, and the information fields other than the x information fields among the at least one information field being optional fields of the AI/ML model activation information field, wherein x is a positive integer.

In some embodiments, the first message is used for activating at least one AI/ML model.

In some embodiments, the first message is a dedicated message for AI/ML model activation; or the first message is a general message for AI/ML model control, and the first message includes an AI/ML model activation information field for the activation operation.

In some embodiments, the second transmitting module 404 includes a second receiving unit 406, configured to receive a second message, wherein the second message is used for the deactivation operation for the AI/ML model.

In some embodiments, the second message includes an AI/ML model deactivation information field, and the AI/ML model deactivation information field includes an AI/ML model identifier field.

In a case where the AI/ML model identifier includes one information field, the information format of the AI/ML model identifier field contained in the AI/ML model deactivation information field is the definition format of the AI/ML model identifier.

In some embodiments, the second message includes an AI/ML model deactivation information field, and the AI/ML model deactivation information field includes an AI/ML model identifier field.

In a case where the AI/ML model identifier includes at least two information fields, the information format of the AI/ML model identifier field contained in the AI/ML model deactivation information field includes up to (2ⁿ-1) types, wherein n is the number of information fields in the AI/ML model identifier.

In some embodiments, the AI/ML model deactivation information field further includes at least one other information field, and each of the at least one other information field contains at least one of information 2 to information 17.

In some embodiments, the AI/ML model deactivation information field includes at least one information field, and the information format of the AI/ML model deactivation information field includes: y information fields among the at least one information field being mandatory fields of the AI/ML model deactivation information field, and the information fields other than the y information fields among the at least one information field being optional fields of the AI/ML model deactivation information field, wherein y is a positive integer.

In some embodiments, the second message is used for deactivating at least one AI/ML model.

In some embodiments, the second message is a dedicated message for deactivation of the AI/ML model; or the second message is a general message for AI/ML model control, and the second message includes an AI/ML model deactivation information field for the deactivation operation.

In some embodiments, the second transmitting module 404 includes: a second receiving unit 406, configured to receive a third message, wherein the third message is used for the switching operation for the AI/ML model.

In some embodiments, the third message includes an AI/ML model activation information field and an AI/ML model deactivation information field.

The AI/ML model activation information field includes the AI/ML model identifier of at least one AI/ML model that needs to be activated.

The AI/ML model deactivation information field includes the AI/ML model identifier of at least one AI/ML model that needs to be deactivated.

In some embodiments, the third message includes an AI/ML model activation information field.

The AI/ML model activation information field includes the AI/ML model identifier of at least one AI/ML model that needs to be activated.

In some embodiments, the second transmitting module 404 includes a second receiving unit 406, configured to receive a fourth message, wherein the fourth message is used for the deletion operation for the AI/ML model.

In some embodiments, the fourth message includes an AI/ML model deletion information field, and the AI/ML model deletion information field includes an AI/ML model identifier field.

In a case where the AI/ML model identifier includes one information field, the information format of the AI/ML model identifier field contained in the AI/ML model deletion information field is the definition format of the AI/ML model identifier.

In some embodiments, the fourth message includes an AI/ML model deletion information field, and the AI/ML model deletion information field includes an AI/ML model identifier field.

In a case where the AI/ML model identifier includes at least two information fields, the information format of the AI/ML model identifier field contained in the AI/ML model deletion information field includes up to (2ⁿ-1) types, wherein n is the number of information fields in the AI/ML model identifier.

In some embodiments, the AI/ML model deletion information field further includes at least one other information field, and each of the at least one other information field contains at least one of information 2 to information 17.

In some embodiments, the AI/ML model deletion information field includes at least one information field, and the information format of the AI/ML model deletion information field includes: z information fields among the at least one information field being mandatory fields of the AI/ML model deletion information field, and the information fields other than the z information fields among the at least one information field being optional fields of the AI/ML model deletion information field, wherein z is a positive integer.

In some embodiments, the fourth message is used for deleting at least one AI/ML model.

In some embodiments, the fourth message is a dedicated message for deletion of the AI/ML model; or the fourth message is a general message for AI/ML model control, and the fourth message includes an AI/ML model deletion information field for the deletion operation.

In some embodiments, the second transmitting module 404 includes a second transmitting unit 405, configured to transmit a fifth message, wherein the fifth message includes AI/ML model-related information associated with the second communication device. The AI/ML model-related information includes AI/ML model identifier and/or AI/ML model description information.

In some embodiments, the second transmitting module 404 includes a second receiving unit 406, configured to receive a sixth message, wherein the sixth message is used for requesting the second communication device to provide AI/ML model-related information.

In some embodiments, the second transmitting module 404 includes a second receiving unit 406, configured to receive a seventh message, wherein the seventh message includes AI/ML model-related information associated with the first communication device.

In some embodiments, the receiver of the fifth message is the first communication device. In a case where the first communication device is a terminal device or first access network device, and the second communication device is a second access network device, the AI/ML model-related information includes AI/ML model-related information associated with the serving cell and/or AI/ML model-related information associated with at least one neighboring cell of the serving message.

In some embodiments, the AI/ML model-related information associated with at least one neighboring cell is configured based on the frequency point granularity or cell granularity.

In some embodiments, the receiver of the fifth message is the first communication device. In a case where the first communication device is a core network device, and the second communication device is an access network device, the AI/ML model-related information is configured based on the access network granularity or TAC granularity.

In some embodiments, the receiver of the fifth message is the first communication device. In a case where the first communication device is a terminal device or access network device or first core network device, and the second communication device is a second core network device, the AI/ML model-related information is configured based on the core network granularity or TAC granularity.

In some embodiments, the receiver of the fifth message is the first communication device. In a case where the first communication device is a first terminal device or an access network device or a core network device, and the second communication device is a second terminal device, the AI/ML model-related information is configured based on the terminal device granularity.

In some embodiments, the second transmitting module 404 includes a second transmitting unit 405, configured to transmit an eighth message, wherein the eighth message includes at least one AI/ML model identifier defined using the global unique identifier and at least one AI/ML model identifier defined using the regional definition identifier.

A one-to-one, one-to-many, or many-to-one association relationship is present between at least one AI/ML model identifier defined using the global unique identifier and at least one AI/ML model identifier defined using the regional definition identifier.

In some embodiments, the eighth message further includes AI/ML model-related information associated with each AI/ML model identifier or each group of AI/ML model identifiers defined using the regional definition identifier.

In some embodiments, the second transmitting module 404 includes a second receiving unit 406, configured to receive a ninth message, wherein the ninth message includes at least one AI/ML model identifier defined using the global unique identifier.

In some embodiments, the ninth message further includes AI/ML model-related information associated with each AI/ML model identifier defined using the global unique identifier.

In some embodiments, the eighth message is a response message to the ninth message, or the eighth message is a message actively triggered by the second communication device.

In some embodiments, the receiver of the eighth message is the first communication device, and the second transmitting module 404 includes a second transmitting unit 405, configured to actively trigger transmitting the eighth message in a case where the first communication device leaves the effective area of the regional definition identifier supported by the second communication device.

In some embodiments, the receiver of the eighth message is the first communication device, and the second transmitting module 404 includes a second receiving unit 406, configured to receive a tenth message in a case where the first communication device leaves the effective area of the regional definition identifier supported by the second communication device. The tenth message is used for requesting to update the mapping relationship between at least one AI/ML model identifier defined using the global unique identifier and at least one AI/ML model identifier defined using the regional definition identifier.

In some embodiments, the model control message is a unicast message, a multicast message, or a broadcast message.

In some embodiments, the model control message is any one of: a NAS message, an RRC message, a MAC CE message, a DCI message, a UCI message, a PUSCH message, an inter-node message, an Xn message, an F1 message, an E1 message, an NG message, or a core network bus message.

In some embodiments, the second transmitting module 404 is configured to transmit the model control message to the first communication device.

The first communication device is a terminal device, and the second communication device is a network device; or the first communication device is a network device, and the second communication device is a terminal device; or the first communication device is a first terminal device, and the second communication device is a second terminal device.

FIG. 12 is a schematic structural diagram of a communication device (terminal device or network device) according to some embodiments of the present disclosure. The communication device includes: a processor 101, a receiver 102, a transmitter 103, a memory 104, and a bus 105.

The processor 101 includes one or more processing cores, and the processor 101 runs various functional applications and performs information processing by running software programs and modules.

The receiver 102 and the transmitter 103 may be implemented as a communication component. The communication component may be a communication chip. The communication component may be referred to as a transceiver.

The memory 104 is connected to the processor 101 via the bus 105.

The memory 104 may be configured to store at least one instruction. The processor 101 is configured to execute the at least one instruction to perform the processes in the method embodiments described above.

In addition, the memory 104 may be implemented using any type of volatile or non-volatile storage device or a combination thereof. The volatile or non-volatile storage device includes but is not limited to: a magnetic disk or an optical disk, an electrically-erasable programmable read-only memory (EEPROM), an erasable programmable read-only memory (EPROM), a static random access memory (SRAM), a read-only memory (ROM), a magnetic memory, a flash memory, a programmable read-only memory (PROM).

In a case where the communication device is implemented as the first communication device, the processor and transceiver in the communication device involved in the present disclosure is capable of performing the processes applicable to the first communication device in any of the methods described above, which is not described herein any further.

In some embodiments, in a case where the communication device is implemented as the first communication device, the transceiver is configured to transmit a model control message, wherein the model control message is used for controlling an AI/ML model, the model control message including the AI/ML model identifier of the AI/ML model.

In a case where the communication device is implemented as the second communication device, the processor and transceiver in the communication device involved in the present disclosure is capable of performing the processes applicable to the second communication device in any of the methods described above, which is not described herein any further.

In some embodiments, in a case where the communication device is implemented as the second communication device, the transceiver is configured to transmit a model control message, wherein the model control message is used for controlling an AI/ML model, the model control message including the AI/ML model identifier of the AI/ML model.

In some embodiments, a computer-readable storage medium is also provided. The computer-readable storage medium stores at least one instruction, at least one program, a code set, or an instruction set. The at least one instruction, the at least one program, the code set, or instruction set, when loaded and executed by a processor, causes the communication device to perform the method for controlling models described in the above method embodiments.

In some embodiments, a chip is also provided. The chip includes one or more programmable logic circuits and/or one or more program instructions. The chip, when running on a communication device, causes the communication device to perform the method for controlling models described above.

In some embodiments, a computer program product is also provided. The computer program product, when running on a processor of a communication device, causes the communication device to perform the method for controlling models described above.

Those skilled in the art should understand that all or some of the processes in the above embodiments may be implemented by hardware, or by instructing related hardware using a program. The program may be stored in a computer-readable storage medium. The storage medium may be a ROM, a magnetic disk, an optical disk, or the like.

Described above are merely exemplary embodiments of the present disclosure and are not intended to limit the present disclosure. Any modifications, equivalent replacements, improvements, and the like, made within the spirit and principles of the present disclosure should fall within the protection scope of the present disclosure.

## Claims

1. A method for controlling models, applicable to a first communication device, the method comprising:
transmitting a model control message, wherein the model control message is used for controlling an artificial intelligence (AI)/machine learning (ML) model, and the model control message comprises an AI/ML model identifier of the AI/ML model.

2. The method according to claim 1, wherein an association relationship is present between the AI/ML model identifier and AI/ML model description information associated with the AI/ML model.

3. The method according to claim 2, wherein the AI/ML model description information comprises at least one of:
information 1: a functional feature associated with the AI/ML model;
information 2: type information of an input parameter required by the AI/ML model;
information 3: format requirement information of an input parameter required by the AI/ML model;
information 4: a preprocessing rule for an input parameter required by the AI/ML model;
information 5: type information of an output parameter required by the AI/ML model;
information 6: format requirement information of an output parameter required by the AI/ML model;
information 7: a preprocessing rule for an output parameter required by the AI/ML model;
information 8: application scenario information of the AI/ML model;
information 9: deployment location information of the AI/ML model;
information 10: a capability requirement for using the AI/ML model;
information 11: performance monitoring indicator information of the AI/ML model;
information 12: attribution information of the AI/ML model;
information 13: effective usage range information of the AI/ML model;
information 14: generalization feature information of the AI/ML model;
information 15: version number information of algorithm data of the AI/ML model;
information 16: precision level information of an algorithm of the AI/ML model; or
information 17: compilation or storage format information of algorithm data of the AI/ML model.

4. The method according to claim 3, wherein the AI/ML model identifier comprises one information field, and the AI/ML model identifier is associated with the information 1.

5. The method according to claim 3, wherein the AI/ML model identifier comprises one information field, the AI/ML model identifier is associated with the information 1, and the AI/ML model identifier is further associated with at least one of the information 2 to the information 17.

6. The method according to claim 3, wherein the AI/ML model identifier comprises at least two information fields, wherein each of the at least two information fields is associated with at least one of the information 1 to the information 17.

7. The method according to claim 6, wherein the at least two information fields comprise a first information field and at least one additional information field; wherein
the first information field is associated with the information 1; and
each of the at least one additional information field is associated with at least one of the information 2 to the information 17.

8. The method according to claim 6, wherein the at least two information fields comprise a first information field and at least one additional information field; wherein
the first information field is associated with the information 1, and the first information field is further associated with at least one of the information 2 to the information 17; and
each of the at least one additional information field is associated with at least one of the information 2 to the information 17.

9. The method according to any one of claims 1 to 8, wherein the AI/ML model identifier is a global unique identifier or a regional definition identifier.

10. The method according to any one of claims 1 to 9, wherein transmitting the model control message comprises:
transmitting a first message, wherein the first message is used for an activation operation for the AI/ML model.

11. The method according to claim 10, wherein the first message comprises an AI/ML model activation information field, the AI/ML model activation information field comprising an AI/ML model identifier field;
in a case where the AI/ML model identifier comprises one information field, an information format of the AI/ML model identifier field in the AI/ML model activation information field is a definition format of the AI/ML model identifier.

12. The method according to claim 10, wherein the first message comprises an AI/ML model activation information field, the AI/ML model activation information field comprising an AI/ML model identifier field;
in a case where the AI/ML model identifier comprises at least two information fields, an information format of the AI/ML model identifier field in the AI/ML model activation information field comprises up to (2ⁿ-1) types, wherein n is a number of information fields in the AI/ML model identifier.

13. The method according to claim 11 or 12, wherein the AI/ML model activation information field further comprises at least one other information field, each of the at least one other information field comprising at least one of the information 2 to the information 17.

14. The method according to any one of claims 11 to 13, wherein the AI/ML model activation information field comprises at least one information field, and an information format of the AI/ML model activation information field comprises:
x information fields among the at least one information field being mandatory fields of the AI/ML model activation information field, and information fields other than the x information fields among the at least one information field being optional fields of the AI/ML model activation information field, wherein x is a positive integer.

15. The method according to any one of claims 10 to 14, wherein the first message is used for activating at least one AI/ML model.

16. The method according to any one of claims 10 to 15, wherein
the first message is a dedicated message for AI/ML model activation; or
the first message is a general message for AI/ML model control, and the first message comprises an AI/ML model activation information field for the activation operation.

17. The method according to any one of claims 1 to 16, wherein transmitting the model control message comprises:
transmitting a second message, wherein the second message is used for a deactivation operation for the AI/ML model.

18. The method according to claim 17, wherein the second message comprises an AI/ML model deactivation information field, the AI/ML model deactivation information field comprising an AI/ML model identifier field;
wherein in a case where the AI/ML model identifier comprises one information field, an information format of the AI/ML model identifier field in the AI/ML model deactivation information field is a definition format of the AI/ML model identifier.

19. The method according to claim 17, wherein the second message comprises an AI/ML model deactivation information field, the AI/ML model deactivation information field comprising an AI/ML model identifier field;
wherein in a case where the AI/ML model identifier comprises at least two information fields, an information format of the AI/ML model identifier field in the AI/ML model deactivation information field comprises up to (2ⁿ-1) types, wherein n is a number of information fields in the AI/ML model identifier.

20. The method according to claim 18 or 19, wherein the AI/ML model deactivation information field further comprises at least one other information field, each of the at least one other information field comprising at least one of the information 2 to the information 17.

21. The method according to any one of claims 18 to 20, wherein the AI/ML model deactivation information field comprises at least one information field, and an information format of the AI/ML model deactivation information field comprises:
y information fields among the at least one information field being mandatory fields of the AI/ML model deactivation information field, and information fields other than the y information fields among the at least one information field being optional fields of the AI/ML model deactivation information field, wherein y is a positive integer.

22. The method according to any one of claims 17 to 21, wherein the second message is used for deactivating at least one AI/ML model.

23. The method according to any one of claims 17 to 22, wherein
the second message is a dedicated message for deactivation of the AI/ML model; or
the second message is a general message for AI/ML model control, and the second message comprises an AI/ML model deactivation information field for the deactivation operation.

24. The method according to any one of claims 1 to 23, wherein transmitting the model control message comprises:
transmitting a third message, wherein the third message is used for a switching operation for the AI/ML model.

25. The method according to claim 24, wherein the third message comprises an AI/ML model activation information field and an AI/ML model deactivation information field; wherein
the AI/ML model activation information field comprises the AI/ML model identifier of at least one AI/ML model that needs to be activated; and
the AI/ML model deactivation information field comprises the AI/ML model identifier of at least one AI/ML model that needs to be deactivated.

26. The method according to claim 24, wherein the third message comprises an AI/ML model activation information field;
wherein the AI/ML model activation information field comprises the AI/ML model identifier of at least one AI/ML model that needs to be activated.

27. The method according to any one of claims 1 to 26, wherein transmitting the model control message comprises:
transmitting a fourth message, wherein the fourth message is used for a deletion operation for the AI/ML model.

28. The method according to claim 27, wherein the fourth message comprises an AI/ML model deletion information field, the AI/ML model deletion information field comprising an AI/ML model identifier field;
wherein in a case where the AI/ML model identifier comprises one information field, an information format of the AI/ML model identifier field in the AI/ML model deletion information field is a definition format of the AI/ML model identifier.

29. The method according to claim 27, wherein the fourth message comprises an AI/ML model deletion information field, the AI/ML model deletion information field comprising an AI/ML model identifier field;
wherein in a case where the AI/ML model identifier comprises at least two information fields, an information format of the AI/ML model identifier field in the AI/ML model deletion information field comprises up to (2ⁿ-1) types, wherein n is a number of information fields in the AI/ML model identifier.

30. The method according to claim 28 or 29, wherein the AI/ML model deletion information field further comprises at least one other information field, each of the at least one other information field comprising at least one of information 2 to information 17.

31. The method according to any one of claims 28 to 30, wherein the AI/ML model deletion information field comprises at least one information field, and an information format of the AI/ML model deletion information field comprises:
z information fields among the at least one information field being mandatory fields of the AI/ML model deletion information field, and information fields other than the z information fields among the at least one information field being optional fields of the AI/ML model deletion information field, wherein z is a positive integer.

32. The method according to any one of claims 27 to 31, wherein the fourth message is used for deleting at least one AI/ML model.

33. The method according to any one of claims 27 to 32, wherein
the fourth message is a dedicated message for deletion of the AI/ML model; or
the fourth message is a general message for AI/ML model control, and the fourth message comprises an AI/ML model deletion information field for the deletion operation.

34. The method according to any one of claims 1 to 33, wherein transmitting the model control message comprises:
receiving a fifth message, wherein the fifth message comprises AI/ML model-related information associated with a second communication device, the AI/ML model-related information comprising the AI/ML model identifier and/or AI/ML model description information.

35. The method according to claim 34, further comprising:
transmitting a sixth message, wherein the sixth message is used for requesting the second communication device to provide the AI/ML model-related information.

36. The method according to claim 34 or 35, further comprising:
transmitting a seventh message, wherein the seventh message comprises AI/ML model-related information associated with the first communication device.

37. The method according to any one of claims 34 to 36, wherein
a transmitter of the fifth message is the second communication device; and
in a case where the first communication device is a terminal device or a first access network device, and the second communication device is a second access network device, the AI/ML model-related information comprises AI/ML model-related information associated with a serving cell and/or AI/ML model-related information associated with at least one neighboring cell of the serving message.

38. The method according to claim 37, wherein the AI/ML model-related information associated with the at least one neighboring cell is configured based on a frequency point granularity or a cell granularity.

39. The method according to any one of claims 34 to 36, wherein
a transmitter of the fifth message is the second communication device; and
in a case where the first communication device is a core network device, and the second communication device is an access network device, the AI/ML model-related information is configured based on an access network granularity or a tracking area code (TAC) granularity.

40. The method according to any one of claims 34 to 36, wherein
a transmitter of the fifth message is the second communication device; and
in a case where the first communication device is a terminal device or an access network device or a first core network device, and the second communication device is a second core network device, the AI/ML model-related information is configured based on a core network granularity or a tracking area code (TAC) granularity.

41. The method according to any one of claims 34 to 36, wherein a transmitter of the fifth message is the second communication device; and
in a case where the first communication device is a first terminal device or an access network device or a core network device, and the second communication device is a second terminal device, the AI/ML model-related information is configured based on a terminal device granularity.

42. The method according to any one of claims 1 to 41, wherein transmitting the model control message comprises:
receiving an eighth message, wherein the eighth message comprises at least one AI/ML model identifier defined using a global unique identifier and at least one AI/ML model identifier defined using a regional definition identifier;
wherein a one-to-one, one-to-many, or many-to-one association relationship is present between at least one AI/ML model identifier defined using the global unique identifier and at least one AI/ML model identifier defined using the regional definition identifier.

43. The method according to claim 42, wherein the eighth message further comprises AI/ML model-related information associated with each of the at least one AI/ML model identifier or each group of the at least one AI/ML model identifier defined using the regional definition identifier.

44. The method according to claim 42 or 43, further comprising:
transmitting a ninth message, wherein the ninth message comprises at least one AI/ML model identifier defined using the global unique identifier.

45. The method according to claim 44, wherein the ninth message further comprises AI/ML model-related information associated with each of the at least one AI/ML model identifier defined using the global unique identifier.

46. The method according to any one of claims 42 to 45, wherein the eighth message is a response message to the ninth message, or the eighth message is a message actively triggered by a message transmitter.

47. The method according to any one of claims 42 to 46, wherein a transmitter of the eighth message is a second communication device, and receiving the eighth message comprises:
receiving the eighth message actively triggered by the second communication device in a case where the first communication device leaves an effective area of a regional definition identifier supported by the second communication device.

48. The method according to any one of claims 42 to 47, wherein a transmitter of the eighth message is a second communication device, and the method further comprises:
transmitting a tenth message in a case where the first communication device leaves an effective area of a regional definition identifier supported by the second communication device, wherein the tenth message is used for requesting to update a mapping relationship between the at least one AI/ML model identifier defined using the global unique identifier and the at least one AI/ML model identifier defined using the regional definition identifier.

49. The method according to any one of claims 1 to 48, wherein the model control message is a unicast message, a multicast message, or a broadcast message.

50. The method according to any one of claims 1 to 49, wherein the model control message is any one of:
a non-access stratum (NAS) message, a radio resource control (RRC) message, a medium access control (MAC) control element (CE) message, a downlink control information (DCI) message, an uplink control information (UCI) message, a physical uplink shared channel (PUSCH) message, an inter-node message, an Xn message, an F1 message, an E1 message, an NG message, or a core network bus message.

51. The method according to any one of claims 1 to 50, wherein transmitting the model control message comprises:
transmitting the model control message to a second communication device; wherein
the first communication device is a terminal device, and the second communication device is a network device; or
the first communication device is a network device, and the second communication device is a terminal device; or
the first communication device is a first terminal device, and the second communication device is a second terminal device; or
the first communication device is a first network device, and the second communication device is a second network device.

52. A method for controlling models, applicable to a second communication device, the method comprising:
transmitting a model control message, wherein the model control message is used for controlling an artificial intelligence (AI)/machine learning (ML) model, and the model control message comprises an AI/ML model identifier of the AI/ML model.

53. The method according to claim 52, wherein an association relationship is present between the AI/ML model identifier and AI/ML model description information associated with the AI/ML model.

54. The method according to claim 53, wherein the AI/ML model description information comprises at least one of:
information 1: a functional feature associated with the AI/ML model;
information 2: type information of an input parameter required by the AI/ML model;
information 3: format requirement information of an input parameter required by the AI/ML model;
information 4: a preprocessing rule for an input parameter required by the AI/ML model;
information 5: type information of an output parameter required by the AI/ML model;
information 6: format requirement information of an output parameter required by the AI/ML model;
information 7: a preprocessing rule for an output parameter required by the AI/ML model;
information 8: application scenario information of the AI/ML model;
information 9: deployment location information of the AI/ML model;
information 10: a capability requirement for using the AI/ML model;
information 11: performance monitoring indicator information of the AI/ML model;
information 12: attribution information of the AI/ML model;
information 13: effective usage range information of the AI/ML model;
information 14: generalization feature information of the AI/ML model;
information 15: version number information of algorithm data of the AI/ML model;
information 16: precision level information of an algorithm of the AI/ML model; or
information 17: compilation or storage format information of algorithm data of the AI/ML model.

55. The method according to claim 54, wherein the AI/ML model identifier comprises one information field, and the AI/ML model identifier is associated with the information 1.

56. The method according to claim 54, wherein the AI/ML model identifier comprises one information field, the AI/ML model identifier is associated with the information 1, and the AI/ML model identifier is also associated with at least one of the information 2 to the information 17.

57. The method according to claim 54, wherein the AI/ML model identifier comprises at least two information fields, wherein each of the at least two information fields is associated with at least one of the information 1 to the information 17.

58. The method according to claim 57, wherein the at least two information fields comprise a first information field and at least one additional information field; wherein
the first information field is associated with the information 1; and
each of the at least one additional information field is associated with at least one of the information 2 to the information 17.

59. The method according to claim 57, wherein the at least two information fields comprise a first information field and at least one additional information field; wherein
the first information field is associated with the information 1, and the first information field is also associated with at least one of the information 2 to the information 17; and
each of the at least one additional information field is associated with at least one of the information 2 to the information 17.

60. The method according to any one of claims 52 to 59, wherein the AI/ML model identifier is a global unique identifier or a regional definition identifier.

61. The method according to any one of claims 52 to 60 wherein transmitting the model control message comprises:
receiving a first message, wherein the first message is used for an activation operation for the AI/ML model.

62. The method according to claim 61, wherein the first message comprises an AI/ML model activation information field, the AI/ML model activation information field comprising an AI/ML model identifier field;
wherein in a case where the AI/ML model identifier comprises one information field, an information format of the AI/ML model identifier field in the AI/ML model activation information field is a definition format of the AI/ML model identifier.

63. The method according to claim 61, wherein the first message comprises an AI/ML model activation information field, the AI/ML model activation information field comprising an AI/ML model identifier field;
wherein in a case where the AI/ML model identifier comprises at least two information fields, an information format of the AI/ML model identifier field in the AI/ML model activation information field comprises up to (2ⁿ-1) types, wherein n is a number of information fields in the AI/ML model identifier.

64. The method according to claim 62 or 63, wherein the AI/ML model activation information field further comprises at least one other information field, each of the at least one other information field comprising at least one of the information 2 to the information 17.

65. The method according to any one of claims 62 to 64, wherein the AI/ML model activation information field comprises at least one information field, and an information format of the AI/ML model activation information field comprises:
x information fields among the at least one information field being mandatory fields of the AI/ML model activation information field, and information fields other than the x information fields among the at least one information field being optional fields of the AI/ML model activation information field, wherein x is a positive integer.

66. The method according to any one of claims 61 to 65, wherein the first message is used for activating at least one AI/ML model.

67. The method according to any one of claims 61 to 66, wherein
the first message is a dedicated message for AI/ML model activation; or
the first message is a general message for AI/ML model control, and the first message comprises an AI/ML model activation information field for the activation operation.

68. The method according to any one of claims 52 to 67, wherein transmitting the model control message comprises:
receiving a second message, wherein the second message is used for a deactivation operation for the AI/ML model.

69. The method according to claim 68, wherein the second message comprises an AI/ML model deactivation information field, the AI/ML model deactivation information field comprising an AI/ML model identifier field;
wherein in a case where the AI/ML model identifier comprises one information field, an information format of the AI/ML model identifier field in the AI/ML model deactivation information field is a definition format of the AI/ML model identifier.

70. The method according to claim 68, wherein the second message comprises an AI/ML model deactivation information field, the AI/ML model deactivation information field comprising an AI/ML model identifier field;
wherein in a case where the AI/ML model identifier comprises at least two information fields, an information format of the AI/ML model identifier field in the AI/ML model deactivation information field comprises up to (2ⁿ-1) types, wherein n is a number of information fields in the AI/ML model identifier.

71. The method according to claim 69 or 70, wherein the AI/ML model deactivation information field further comprises at least one other information field, each of the at least one other information field comprising at least one of the information 2 to the information 17.

72. The method according to any one of claims 69 to 71, wherein the AI/ML model deactivation information field comprises at least one information field, and an information format of the AI/ML model deactivation information field comprises:
y information fields among the at least one information field being mandatory fields of the AI/ML model deactivation information field, and information fields other than the y information fields among the at least one information field being optional fields of the AI/ML model deactivation information field, wherein y is a positive integer.

73. The method according to any one of claims 68 to 72, wherein the second message is used for deactivating at least one AI/ML model.

74. The method according to any one of claims 68 to 73, wherein
the second message is a dedicated message for deactivation of the AI/ML model; or
the second message is a general message for AI/ML model control, and the second message comprises an AI/ML model deactivation information field for the deactivation operation.

75. The method according to any one of claims 52 to 74, wherein transmitting the model control message comprises:
receiving a third message, wherein the third message is used for a switching operation for the AI/ML model.

76. The method according to claim 75, wherein the third message comprises an AI/ML model activation information field and an AI/ML model deactivation information field; wherein
the AI/ML model activation information field comprises the AI/ML model identifier of at least one AI/ML model that needs to be activated; and
the AI/ML model deactivation information field comprises the AI/ML model identifier of at least one AI/ML model that needs to be deactivated.

77. The method according to claim 75, wherein the third message comprises an AI/ML model activation information field;
wherein the AI/ML model activation information field comprises the AI/ML model identifier of at least one AI/ML model that needs to be activated.

78. The method according to any one of claims 52 to 77, wherein transmitting the model control message comprises:
receiving a fourth message, wherein the fourth message is used for a deletion operation for the AI/ML model.

79. The method according to claim 78, wherein the fourth message comprises an AI/ML model deletion information field, the AI/ML model deletion information field comprising an AI/ML model identifier field;
wherein in a case where the AI/ML model identifier comprises one information field, an information format of the AI/ML model identifier field in the AI/ML model deletion information field is a definition format of the AI/ML model identifier.

80. The method according to claim 78, wherein the fourth message comprises an AI/ML model deletion information field, the AI/ML model deletion information field comprising an AI/ML model identifier field;
wherein in a case where the AI/ML model identifier comprises at least two information fields, an information format of the AI/ML model identifier field in the AI/ML model deletion information field comprises up to (2ⁿ-1) types, wherein n is a number of information fields in the AI/ML model identifier.

81. The method according to claim 79 or 80, wherein the AI/ML model deletion information field further comprises at least one other information field, each of the at least one other information field comprising at least one of the information 2 to the information 17.

82. The method according to any one of claims 79 to 81, wherein the AI/ML model deletion information field comprises at least one information field, and an information format of the AI/ML model deletion information field comprises:
z information fields among the at least one information field being mandatory fields of the AI/ML model deletion information field, and information fields other than the z information fields among the at least one information field being optional fields of the AI/ML model deletion information field, wherein z is a positive integer.

83. The method according to any one of claims 78 to 82, wherein the fourth message is used for deleting at least one AI/ML model.

84. The method according to any one of claims 78 to 83, wherein
the fourth message is a dedicated message for deletion of the AI/ML model; or
the fourth message is a general message for AI/ML model control, and the fourth message comprises an AI/ML model deletion information field for the deletion operation.

85. The method according to any one of claims 52 to 84, wherein transmitting the model control message comprises:
transmitting a fifth message, wherein the fifth message comprises AI/ML model-related information associated with a second communication device, the AI/ML model-related information comprising the AI/ML model identifier and/or AI/ML model description information.

86. The method according to claim 85, further comprising:
receiving a sixth message, wherein the sixth message is used for requesting the second communication device to provide the AI/ML model-related information.

87. The method according to claim 85 or 86, further comprising:
receiving a seventh message, wherein the seventh message comprises AI/ML model-related information associated with the first communication device.

88. The method according to any one of claims 85 to 87, wherein a receiver of the fifth message is a first communication device;
wherein in a case where the first communication device is a terminal device or a first access network device, and the second communication device is a second access network device, the AI/ML model-related information comprises AI/ML model-related information associated with a serving cell and/or AI/ML model-related information associated with at least one neighboring cell of the serving message.

89. The method according to claim 88, wherein the AI/ML model-related information associated with the at least one neighboring cell is configured based on a frequency point granularity or a cell granularity.

90. The method according to any one of claims 85 to 87, wherein a receiver of the fifth message is a first communication device;
wherein in a case where the first communication device is a core network device, and the second communication device is an access network device, the AI/ML model-related information is configured based on an access network granularity or a tracking area code (TAC) granularity.

91. The method according to any one of claims 85 to 87, wherein a receiver of the fifth message is the first communication device;
wherein in a case where the first communication device is a terminal device or an access network device or a first core network device, and the second communication device is a second core network device, the AI/ML model-related information is configured based on a core network granularity or a tracking area code (TAC) granularity.

92. The method according to any one of claims 85 to 87, wherein a receiver of the fifth message is a first communication device;
wherein in a case where the first communication device is a first terminal device or an access network device or a core network device, and the second communication device is a second terminal device, the AI/ML model-related information is configured based on a terminal device granularity.

93. The method according to any one of claims 52 to 92, wherein transmitting the model control message comprises:
transmitting an eighth message, wherein the eighth message comprises at least one AI/ML model identifier defined using a global unique identifier and at least one AI/ML model identifier defined using a regional definition identifier;
wherein a one-to-one, one-to-many, or many-to-one association relationship is present between at least one AI/ML model identifier defined using the global unique identifier and at least one AI/ML model identifier defined using the regional definition identifier.

94. The method according to claim 93, wherein the eighth message further comprises AI/ML model-related information associated with each of the at least one AI/ML model identifier or each group of the at least one AI/ML model identifier defined using the regional definition identifier.

95. The method according to claim 93 or 94, further comprising:
receiving a ninth message, wherein the ninth message comprises at least one AI/ML model identifier defined using the global unique identifier.

96. The method according to claim 95, wherein the ninth message further comprises AI/ML model-related information associated with each of the at least one AI/ML model identifier defined using the global unique identifier.

97. The method according to any one of claims 93 to 96, wherein the eighth message is a response message to the ninth message, or the eighth message is a message actively triggered by the second communication device.

98. The method according to any one of claims 93 to 97, wherein the receiver of the eighth message is a first communication device, and receiving the eighth message comprises:
actively triggering transmission of the eighth message in a case where the first communication device leaves an effective area of a regional definition identifier supported by the second communication device.

99. The method according to any one of claims 93 to 98, wherein the receiver of the eighth message is a first communication device, and the method further comprises:
receiving a tenth message in a case where the first communication device leaves an effective area of a regional definition identifier supported by the second communication device, wherein the tenth message is used for requesting to update a mapping relationship between the at least one AI/ML model identifier defined using the global unique identifier and the at least one AI/ML model identifier defined using the regional definition identifier.

100. The method according to any one of claims 52 to 99, wherein the model control message is a unicast message, a multicast message, or a broadcast message.

101. The method according to any one of claims 52 to 100, wherein the model control message is any one of:
a non-access stratum (NAS) message, a radio resource control (RRC) message, a medium access control (MAC) control element (CE) message, a downlink control information (DCI) message, an uplink control information (UCI) message, a physical uplink shared channel (PUSCH) message, an inter-node message, an Xn message, an F1 message, an E1 message, an NG message, or a core network bus message.

102. The method according to any one of claims 52 to 101, wherein transmitting the model control message comprises:
transmitting the model control message to a first communication device; wherein
the first communication device is a terminal device, and the second communication device is a network device; or
the first communication device is a network device, and the second communication device is a terminal device; or
the first communication device is a first terminal device, and the second communication device is a second terminal device; or
the first communication device is a first network device, and the second communication device is a second network device.

103. An apparatus for controlling models, implemented as a first communication device, the apparatus comprising:
a first transmitting module, configured to transmit a model control message, wherein the model control message is used for controlling an artificial intelligence (AI)/machine learning (ML) model, and the model control message comprises an AI/ML model identifier of the AI/ML model.

104. An apparatus for controlling models, implemented as a second communication device, the apparatus comprising:
a second transmitting module, configured to transmit a model control message, wherein the model control message is used for controlling an artificial intelligence (AI)/machine learning (ML) model, and the model control message comprises an AI/ML model identifier of the AI/ML model.

105. A first communication device, comprising a processor and a transceiver connected to the processor;
wherein the transceiver is configured to transmit a model control message, wherein the model control message is used for controlling an artificial intelligence (AI)/machine learning (ML) model, and the model control message comprises an AI/ML model identifier of the AI/ML model.

106. A second communication device, comprising a processor and a transceiver connected to the processor;
wherein the transceiver is configured to transmit a model control message, wherein the model control message is used for controlling an artificial intelligence (AI)/machine learning (ML) model, and the model control message comprises an AI/ML model identifier of the AI/ML model.

107. A first communication device, comprising: a memory and a processor;
wherein the memory is configured to store at least one instruction, at least one program, a code set, or an instruction set therein, wherein the at least one instruction, the at least one program, the code set, or the instruction set, when loaded and executed by the processor, causes the first communication device to perform the method for controlling models as defined in any one of claims 1 to 51.

108. A second communication device, comprising: a memory and a processor;
wherein the memory is configured to store at least one instruction, at least one program, a code set, or an instruction set therein, wherein the at least one instruction, the at least one program, the code set, or the instruction set, when loaded and executed by the processor, causes the second communication device to perform the method for controlling models as defined in any one of claims 52 to 102.

109. A computer-readable storage medium, storing one or more executable instructions therein, wherein the one or more executable instructions, when loaded and executed by a processor of a communication device, cause the communication device to perform the method for controlling models as defined in any one of claims 1 to 102.

110. A chip, comprising: one or more programmable logic circuits and/or one or more programs, wherein a communication device equipped with the chip is configured to perform the method for controlling models as defined in any one of claims 1 to 102.
